# EUROPÄISCHE PATENTSCHRIFT

(11) **EP 1 851 094 B1**
(45) Veröffentlichungstag und Bekanntmachung des Hinweises auf die Patenterteilung: **18.01.2012**
(21) Anmeldenummer: 06753294.5
(22) Anmeldetag: 19.06.2006
(51) Int. Cl.: B60R 21/20

(54) **AIRBAGMODUL FÜR EIN KRAFTFAHRZEUG**
AIRBAG MODULE FOR A MOTOR VEHICLE
SAC GONFLABLE DESTINE A UN VEHICULE AUTOMOBILE

(30) Priorität: 21.07.2005 DE 202005011878 U
(43) Veröffentlichungstag der Anmeldung: 07.11.2007
(73) Patentinhaber: Takata-Petri AG, 63743 Aschaffenburg (DE)
(72) Erfinder: ECKERT, Nick, 12587 Berlin (DE); LIEBETRAU, Matthias, 14612 Falkensee (DE); ISERMANN, Patrick, 14197 Berlin (DE); FAGIR, Rafael, 14055 Berlin (DE)
(74) Vertreter: Baumgärtel, Gunnar
(86) Internationale Anmeldenummer: PCT/DE2006/001110
(87) Internationale Veröffentlichungsnummer: WO 2007/009416

(56) Entgegenhaltungen:
- DE-A1- 10 114 208
- DE-U1- 9 101 099
- PATENT ABSTRACTS OF JAPAN Bd. 016, Nr. 428 (M-1307), 8. September 1992 (1992-09-08) -& JP 04 146840 A (TOKAI RIKA CO LTD), 20. Mai 1992 (1992-05-20)

## Beschreibung

Die Erfindung betrifft ein Airbagmodul für ein Kraftfahrzeug gemäß dem Oberbegriff des Anspruchs 1.

Ein derartiges Airbagmodul umfasst ein zu einem Gassackpaket zusammengelegten Gassack, eine mit dem Gassack zusammenwirkende Komponente des Airbagmoduls, die zum Befestigen und/oder zum Aufblasen des Gassackes mit Gas dient, wobei die Komponente einen ersten Komponententeil aufweist, über den die Komponente mit dem Gassack zusammenwirkt. Weiterhin umfasst ein derartiges Airbagmodul eine Schutzhülle, die den Gassack gasdicht umschließt. Dies ermöglicht das Zusammenfalten bzw. Zusammenraffen des Gassackes zu einem besonders kompakten Gassackpaket unter Einwirkung von Unterdruck und einer anschließenden Beibehaltung des gefalteten Gassackpaketes in äußerst kompakter Form durch die gasdichte Aufnahme des Gassackpaketes in der Schutzhülle. Bei jener Schutzhülle kann es sich insbesondere um eine folienartige, flexible Schutzhülle handeln, die das Gassackpaket eng anliegend umschließen kann. Aus der DE 9101099U ist ein derartiges Airbag modul bekannt.

Der Erfindung liegt das Problem zugrunde, ein Airbagmodul der eingangs genannten Art zu verbessern.

Dieses Problem wird erfindungsgemäß durch die Schaffung eines Airbagmoduls mit den Merkmalen des Anspruchs 1 gelöst.

Danach ist vorgesehen, dass die Schutzhülle auch den ersten Komponententeil umschließt und mindestens eine Öffnung aufweist, durch die hindurch ein zweiter Komponententeil aus dem von der Schutzhülle umschlossenen Raum hinausragt, wobei die Öffnung der Schutzhülle mittels eines Dichtelementes gasdicht verschlossen ist.

Unter einem Dichtelement wird vorliegend eine Dichteinrichtung verstanden, die die zum Hindurchführen des zweiten Komponententeils dienende Öffnung in der Schutzhülle gasdicht abdichtet, wobei dieses Dichtelement nicht unbedingt einteilig ausgebildet sein muss, sondern auch aus einer Mehrzahl einzelner Dichtungsteile bestehen kann.

Die erfindungsgemäße Lösung hat den Vorteil, dass die Komponente aus dem von der Schutzhülle umgebenen Raum abschnittsweise herausgeführt werden kann, ohne dass hierdurch der in dem Raum herrschende Unterdruck verloren geht. Das durch den Unterdruck vorteilhaft klein ausfallende Packmaß des Gassackpakets wird somit aufrechterhalten. Das Dichtelement erstreckt sich zum Abdichten der in der Schutzhülle vorgesehenen Öffnung bevorzugt nach Art eines Dichtungsringes entlang des Randes jener Öffnung und besteht vorteilhaft aus einem elastischen Material, so dass es dichtend an einem (im Wesentlichen formstabilen) Stützbereich des Airbagmoduls anliegen und gegen diesen vorgespannt sein kann.

In einer Variante der Erfindung besteht das Dichtelement zumindest teilweise, vorzugsweise vollständig, aus einem thermoplastischen Material, beispielsweise einem Kunststoff. Bei einem mehrteiligen Dichtelement kann das Dichtelement ein Dichtmittel umfassen, das aus einem thermoplastischen Material gefertigt ist. Das thermoplastische Dichtelement bzw. Dichtmittel ist dabei dazu eingerichtet und vorgesehen, an der Öffnung der Schutzfolie angeordnet zu werden derart, dass es beim Erwärmen mit der Schutzhülle verschmilzt und die Öffnung der Schutzhülle gasdicht verschließt.

In einer Ausführungsform der Erfindung ist die Komponente des Airbagmoduls als ein Gasgenerator zum Aufblasen des Gassackes ausgebildet. Bei dem Gasgenerator kann es sich um einen Kaltgasgenerator handeln, in dessen als Generatorkörper ausgebildeten ersten Komponententeil ein Gas gespeichert ist, das bei Zündung des Gasgenerators freigesetzt wird, oder es kann sich um einen so genannten Heißgenerator handeln, der chemische Stoffe bzw. Verbindungen enthält, die erst nach Zündung des Gasgenerators das freizusetzende Gas erzeugen. Weiter kann es sich um einen so genannten Hybridgasgenerator handeln, in dem einerseits das Gas gespeichert ist und der andererseits eine chemische Verbindung zur Erzeugung zusätzlicher Heißgase enthält. Die Zündung des Gasgenerators erfolgt in der Regel elektrisch über eine mit dem Zünder verbundene elektrische Leitung.

Bevorzugt ist der zweite Komponententeil als eine Zündeinrichtung des Gasgenerators ausgebildet, die zum Zünden des Gasgenerators betätigbar ist.

Bei einer als Gasgenerator ausgebildeten Komponente des Airbagmoduls ist mit Vorteil eine Zerstörung einer flexiblen oder sonstigen Schutzhülle des Gassackes beim Zünden des Gasgenerators zum Einlassen der aus dem Gasgenerator austretenden Gase in den aufzublasenden Gassack nicht erforderlich, da der Generatorkörper (erster Komponententeil) innerhalb des von der Schutzhülle umgebenden Raumes angeordnet ist, so dass insbesondere schädliche Emissionen und die Bildung schädlicher Partikel als Folge einer thermischen Zerstörung der Schutzhülle durch heiße Gase vermieden werden können.

Die Erfindung ermöglicht so in vorteilhafter Weise die Kombination von Modulkonzepten, bei denen einerseits der Gasgenerator innerhalb des Gassacks angeordnet ist, also von dem Gassack umschlossen wird, mit Modulkonzepten bei denen der zu einem Gassackpaket zusammengefaltete Gassack unter Vakuum auf ein besonders kleines Packmaß zusammengefaltet wurde und dann dieses Packmaß durch eine den Gassack umschließende gasdichte (flexible) Schutzhülle beibehalten wird.

Der Stützbereich, an dem das Dichtelement anliegt, ist bevorzugt am Gasgenerator selbst ausgebildet, insbesondere am Gasgeneratorkörper und/oder an einem Zünder der Zündeinrichtung, wobei es letzteren vorteilhaft umgreift.

Der zu einem Gassackpaket zusammengefaltete Gassack umfasst eine mit der Öffnung in der Schutzhülle korrespondierende Durchgangsöffnung, durch die hindurch die Zündeinrichtung und ggf. Teile des Gasgenerators aus dem Gassack hinausragen. Handelt es sich bei dem Gasgenerator beispielsweise um einen längs erstreckten Rohrgangsgenerator, so kann der Zünder einerseits in radialer Richtung von dessen Mantelfläche oder andererseits in axialer Richtung von mindestens einer Stirnseite des Gasgenerators abragen. Es können hierbei beispielsweise auch zwei Zünder vorgesehen sein, die von jeweils einer Stirnseite des Gasgenerators in axialer Richtung abragen.

Die den Gassack und den Gasgenerator umgebende Schutzhülle ist bevorzugt zumindest teilweise als (folienartige) flexible Schutzhülle ausgebildet, d.h., die Schutzhülle kann einerseits vollständig durch eine flexible Schutzhülle gebildet werden oder andererseits durch eine gehäuseartige, ggf. elastisch deformierbare Hülle in Kombination mit einer flexiblen Schutzhülle. Bei einer derartigen Kombination kann insbesondere vorgesehen sein, dass die flexible Schutzhülle dazu dient, eine Deckfläche des gehäuseartigen Bestandteiles der Schutzhülle zu überdecken.

Sofern die Öffnung der Schutzhülle, durch die die Zündeinrichtung hindurchragt, an einem flexiblen oder zumindest einem elastisch deformierbaren Bestandteil der Schutzhülle ausgebildet ist, kann das Dichtelement dazu dienen, den Rand der Öffnung der Schutzhülle gegen einen zugeordneten Stützbereich des Moduls zu verspannen, um die Öffnungen gasundurchlässig zu verschließen.

Sofern dem Airbagmodul ein Gehäuse zugeordnet ist, das den Gasgenerator, den Gassack sowie die flexible Schutzhülle zumindest teilweise umgibt, kann auch dieses eine Öffnung aufweisen, durch die Zündeinrichtung also deren Zünder oder Zündkabel, durchgeführt wird. Das Dichtungselement kann in diesem Fall am Modulgehäuse angeordnet sein.

In einer anderen Ausführungsform der Erfindung ist die mit dem Gassack zusammenwirkende Komponente des Airbagmoduls als ein Befestigungsmittel ausgebildet, das zum Befestigen des Gassackes an einem Kraftfahrzeugteil eingerichtet und vorgesehen ist. Es ist natürlich auch möglich, dass die Komponente des Airbagmoduls als ein Gasgenerator ausgebildet ist, der zugleich zum Befestigen des Gassackes an einem Kraftfahrzeugteil (oder einem Träger des Airbagmoduls) ausgebildet ist.

Aufgrund des Dichtelementes, das die vom zweiten Komponententeil des Befestigungsmittels durchgriffene Öffnung der Schutzhülle abdichtet, ist die Gasdichtigkeit der Schutzhülle gewährleistet, d.h., es kann keine Luft von außen in den von der Schutzhülle umgebenen Raum eindringen und das vorteilhaft kleine Packmaß des Gassackpaketes nachteilig beeinflussen.

Das Befestigungsmittel ermöglicht mit Vorteil eine Befestigung des Gassackpaketes an einem Träger, bei der das Gassackpaket nicht im Querschnitt vom Befestigungsmittel umgriffen werden muss, so dass die Entfaltung des Gassackes beim Aufblasen nicht beeinträchtigt wird.

Vorzugsweise ist das Befestigungsmittel über den ersten Komponententeil der als Befestigungsmittel ausgebildeten Komponente des Airbagmoduls am Gassack befestigt, beispielsweise durch Einklemmen eines Bereiches des Gassacks am ersten Komponententeil.

Der insbesondere mit dem ersten Komponententeil einstückig verbundene zweite Komponententeil des Befestigungsmittels dient vorzugsweise zum Befestigen des Befestigungsmittels an einem Träger des Airbagmoduls, beispielsweise einem Kraftfahrzeugteil.

Besonders bevorzugt ragt der zweite Komponententeil des Befestigungsmittels vom ersten Komponententeil des Befestigungsmittels ab, und zwar bevorzugt in Form zumindest eines Bolzens. Dieser kann an einem freien Endbereich ein Außengewinde aufweisen, so dass der mindestens eine Bolzen durch eine entsprechende Öffnung eines Trägers des Gassackpaketes hindurchgeführt und zum Festlegen am Träger mittels einer Mutter verschraubt werden kann.

Bevorzugt ist der zweite Komponententeil des Befestigungsmittels entlang einer Erstreckungsrichtung längs erstreckt ausgebildet, wobei das Dichtelement den zweiten Komponententeil des Befestigungsmittels bevorzugt im Querschnitt, d.h., quer zur Erstreckungsrichtung umläuft.

Während der zweite Komponententeil des Befestigungsmittels durch die Öffnung der Schutzhülle aus dem von der Schutzhülle umgebenen Raum herausgeführt ist, ist der mit dem zweiten Komponententeil des Befestigungsmittels verbundene erste Komponententeil in einem vom Gassack umgebenen Innenraum des Gassackes angeordnet. Vorzugsweise weist der erste Komponententeil des Befestigungsmittels dabei einen quer zur Erstreckungsrichtung erstreckten Anlagebereich auf, an dem der Gassack abschnittsweise anliegt. Zum Festlegen des Gassackpakets an einem Träger des Gassackspakets kann der am Anlagebereich des ersten Komponententeils des Befestigungsmittels anliegende Abschnitt des Gassackes zwischen jenem Anlagebereich und einem entsprechenden flächigen Bereich des Trägers des Gassackpaketes (beispielsweise ein Kraftfahrzeugteil) eingeklemmt sein. Zum Herausführen des zweiten Komponententeils des Befestigungsmittels aus dem Innenraum des Gassackes, weist dieser zumindest eine mit der Öffnung der Schutzhülle und dem zweiten Komponententeil korrespondierende (fluchtende) Durchgangsöffnung auf, die von einem die Durchgangsöffnung umrandenden ersten Randbereich des Gassackes begrenzt ist.

Der zweite Komponententeil des Befestigungsmittels ist nun entlang der Erstreckungsrichtung durch die entsprechende Durchgangsöffnung des Gassackes geführt, so dass der erste Randbereich des Gassackes, der diese Durchgangsöffnung umrandet, entlang der Erstreckungsrichtung zwischen dem Anlagebereich des ersten Komponententeils des Befestigungsmittels und einem zweiten, die Öffnung der Schutzhülle berandenden zweiten Randbereich (Rand) der Schutzhülle angeordnet ist.

In einem Ausführungsbeispiel ist vorgesehen, dass das Dichtelement zum Abdichten (gasdichten Verschließen) der Öffnung der Schutzhülle den zweiten Randbereich der Schutzhülle entlang der Erstreckungsrichtung des zweiten Komponententeils gegen den Anlagebereich des ersten Komponententeils des Befestigungsmittels drückt.

In einem weiteren Ausführungsbeispiel der Erfindung ist das Dichtelement dazu eingerichtet und vorgesehen, zum Abdichten der Öffnung der Schutzhülle den zweiten Randbereich der Schutzhülle zusammen mit dem ersten Randbereich des Gassackes entlang der Erstreckungsrichtung gegen den Anlagebereich des ersten Komponententeils des Befestigungsmittels zu drücken.

Zu diesem Zweck weist das Dichtelement einen den zweiten Komponententeil des Befestigungsmittels im Querschnitt umgebenden, insbesondere hohlzylinderförmig ausgeformten Körper auf, der mit dem zweiten Komponententeil des Befestigungsmittels fluchtet. Bevorzugt weist dieser Körper einen am zweiten Komponententeil anliegenden und den zweiten Komponententeil im Querschnitt umgreifenden Mantel auf, von dem quer zur Erstreckungsrichtung ein den Mantel umlaufender Flansch absteht, der eine dem zweiten Randbereich der Schutzhülle entlang der Erstreckungsrichtung zugewandte flächig ringförmige erste Seite aufweist, mit der er zum gasdichten Verschließen der Öffnung der Schutzhülle abdichtend am zweiten Randbereich der Schutzhülle anliegt.

Bevorzugt weist das Dichtelement zum Abdichten der Öffnung ein entlang der Erstreckungsrichtung zwischen dem Flansch und dem zweiten, die Öffnung umlaufenden Randbereich der Schutzhülle angeordnetes flexibles Anlageelement auf, das abdichtend am zweiten Randbereich der Schutzhülle anliegt. Eine hierzu benötigte Kraft in Richtung auf den zweiten Randbereich der Schutzhülle, die das Anlageelement zur abdichtenden Anlage am zweiten Randbereich gegen den zweiten Randbereich drückt und dabei entlang der Erstreckungsrichtung komprimiert, wird dabei durch den (hohlzylinderförmigen) Körper des Dichtelementes bereitgestellt, der hierzu geeignet am zweiten Komponententeil des Befestigungsmittels festgelegt ist, beispielsweise mit diesem verklemmt ist. Vorzugsweise ist das Anlageelement als ein Dichtungsring ausgeformt, der den zweiten Komponententeil des Befestigungsmittels im Querschnitt umgreift.

In einem Ausführungsbeispiel der Erfindung ist das Dichtelement dazu ausgebildet, den zweiten Randbereich der Schutzhülle sowie den zweiten Komponententeil des Befestigungsmittels im Querschnitt zu umgreifen und dabei zum Abdichten der Öffnung der Schutzhülle den zweiten Randbereich der Schutzhülle quer zur Erstreckungsrichtung gegen den zweiten Komponententeil des Befestigungsmittels zu drücken. Hierzu ist das Dichtelement vorzugsweise als ein Schlauch, ausgebildet, der entlang der Erstreckungsrichtung über den zweiten Randbereich der Schutzhülle gezogen ist und gegen den zweiten Randbereich vorgespannt ist. Zum Erzeugen der Vorspannung kann der Schlauch aus einem elastischen (rückstellfähigen) Material ausgebildet sein, oder es kann sich um einen Schrumpfschlauch handeln, der sich beim Erwärmen zusammenzieht und dadurch gegen den zweiten Komponententeil unter Zwischenlage des zweiten Randbereiches vorgespannt wird. Alternativ hierzu kann das Dichtelement als ein flexibler O-Ring ausgebildet sein.

In einer anderen Variante der Erfindung ist das Dichtelement zum gasdichten Abdichten der Öffnung der Schutzhülle entlang der Erstreckungsrichtung gegen den zweiten, die Öffnung umlaufenden Randbereich der Schutzhülle vorgespannt, so dass der zweite Randbereich der Schutzhülle, ggf. unter Zwischenlage eines Bereiches des Gassackes, entlang der Erstreckungsrichtung gegen den Anlagebereich des ersten Komponententeils des Befestigungsmittels gedrückt wird.

Bevorzugt ist das Dichtelement dabei quer zur Erstreckungsrichtung gegen den zweiten Komponententeil des Befestigungsmittels vorgespannt. Hierdurch ist das Dichtelement derart am zweiten Komponententeil des Befestigungsmittels festlegbar, dass eine Vorspannung des Dichtelementes gegen den zweiten Randbereich der Schutzhülle entlang der Erstreckungsrichtung dauerhaft aufrechterhalten werden kann. Vorzugsweise weist das Dichtmittel zum Erzeugen der Vorspannung gegen den zweiten Randbereich der Schutzhülle bzw. gegen den zweiten Komponententeil des Befestigungsmittels ein gegen den zweiten Randbereich und den zweiten Komponententeil vorspannbares Federelement auf oder ist als ein solches ausgebildet.

In einem weiteren Ausführungsbeispiel ist das Dichtelement durch den die Öffnung umrandenden zweiten Randbereich der Schutzhülle gebildet, der dazu eingerichtet und vorgesehen ist, beim Erzeugen eines Unterdrucks im Raum der Schutzhülle gegen den zweiten Komponententeil des Befestigungsmittels gedrückt zu werden, so dass die Öffnung der Schutzhülle gasdicht abgedichtet wird. Der zweite Randbereich kann hierbei derart vorgeformt sein, dass er bereits vor Erzeugen eines Unterdruckes in dem von der Schutzhülle umgebenen Raum abschnittsweise entlang der Erstreckungsrichtung erstreckt ist. Hierbei umgreift der zweite Randbereich den zweiten Komponententeil eng, so dass beim Anlegen des Unterdrucks keine Luft entlang des zweiten Komponententeils durch die Öffnung der Schutzhülle in den von der Schutzhülle umgebenen Raum eingesaugt wird.

In einer anderen Variante der Erfindung ist das Dichtelement als eine den zweiten Komponententeil des Befestigungsmittels im Querschnitt umlaufende Beschichtung des zweiten Komponententeiles ausgebildet, mit der der die Öffnung der Schutzhülle umrandende zweite Randbereich derart verbunden ist, dass die Öffnung der Schutzhülle gasdicht abgedichtet ist. Hierzu kann der zweite Randbereich mit der Beschichtung beispielsweise verklebt oder verschweißt sein.

Bevorzugt ist die Beschichtung dazu vorgesehen und eingerichtet, sich durch Erwärmen mit dem zweiten Randbereich der Schutzhülle zu verbinden. Alternativ hierzu kann die Beschichtung auch mechanisch aktivierbar ausgebildet sein, so dass sich die Beschichtung insbesondere durch Drücken des zweiten Randbereiches der Schutzhülle gegen die Beschichtung mit dem zweiten Randbereich der Schutzhülle gasdicht verbindet.

Eine Variante der Erfindung sieht vor, dass das Dichtmittel eine zusätzliche, verformbare (pastöse) Dichtmasse umfasst, die vorzugsweise zwischen dem Dichtelement und dem zweiten Randbereich der Schutzhülle angeordnet ist. Dabei dient die verformbare Dichtmasse zum Füllen eventuell noch vorhandener Freiräume bzw. Hohlräume zwischen dem Dichtelement und dem zweiten Randbereich der Schutzhülle. Alternativ oder zusätzlich ist die Dichtmasse zumindest teilweise zwischen dem zweiten, die Öffnung der Schutzhülle umrandenden Randbereich der Schutzhülle und dem ersten, die Durchgangsöffnung des Gassackes berandenden Randbereich des Gassackes angeordnet.

Vorzugsweise liegt die zusätzliche verformbare Dichtmasse am zweiten Komponententeil des Befestigungsmittels an, und zwar derart, dass die Dichtmasse den zweiten Komponententeil des Befestigungsmittels im Querschnitt umgibt. Hierdurch wird verhindert, dass Gase entlang der Erstreckungsrichtung zwischen dem zweiten Komponententeil des Befestigungsmittels und dem Dichtelement in den von der Schutzhülle umgebenen Raum eindringen können.

Zum Ausgleich von Unebenheiten des Gassackes am ersten Randbereich des Gassackes, z. B. in Form von Falten oder Nähten des Gassackes, ist ein Scheibenelement vorgesehen, welches bevorzugt den zweiten Komponententeil des Befestigungsmittels im Querschnitt ringförmig umgibt, und das bevorzugt entlang der Erstreckungsrichtung des zweiten Komponententeiles des Befestigungsmittels zwischen dem zweiten Randbereich der Schutzhülle und dem ersten Randbereich des Gassackes angeordnet ist. Vorzugsweise ist dabei die Dichtmasse zumindest teilweise entlang der Erstreckungsrichtung zwischen dem Scheibenelement und dem zweiten Randbereich der Schutzhülle angeordnet. Mit Vorteil füllt die Dichtmasse dabei einen gesamten Freiraum aus, der durch das Scheibenelement, den zweiten Randbereich der Schutzhülle und den zweiten Komponententeil des Befestigungsmittels begrenzt ist. Zusätzlich ist bevorzugt vorgesehen, dass die Dichtmasse entlang der Erstreckungsrichtung ebenfalls zwischen dem Scheibenelement und dem ersten Randbereich des Gassackes angeordnet ist.

In einer Variante der Erfindung ist der Anlagebereich des ersten Komponententeiles des Befestigungsmittels als ein flächiger Ring ausgebildet, der zur Anlage an einem eine Einströmöffnung des Gassackes berandenden dritten Randbereich des Gassackes vorgesehen ist, und zwar derart, dass der dritte Randbereich des Gassackes entlang der Erstreckungsrichtung zwischen dem Anlagebereich des ersten Komponententeiles des Befestigungsmittels und der Schutzhülle angeordnet ist. Der Anlagebereich dient dazu, den Gassack (und auch die Schutzfolie) entlang der Erstreckungsrichtung des zweiten Komponententeiles des Befestigungsmittels zwischen einem Träger des Gassackpaketes und dem Anlagebereich einzuklemmen. Hierzu wird der zweite Komponententeil des Befestigungsmittels durch eine entsprechende Öffnung des Trägers geführt und dort festgelegt, so dass der Anlagebereich den am Anlagebereich anliegenden Abschnitt (dritter Randbereich) des Gassackes sowie einen entsprechenden Bereich der Schutzfolie gegen den Träger des Gassackpakets drückt.

Für den Fall, dass der Anlagebereich zur Anlage an dem dritten, die Einströmöffnung des Gassackes berandenden Randbereich des Gassackes vorgesehen ist, ist die Durchgangsöffnung des Gassackes, durch die der zweite Komponententeil des Befestigungsmittels hindurchgeführt ist, am dritten Randbereich ausgebildet.

Bevorzugt steht entlang der Erstreckungsrichtung, die senkrecht auf einer Erstreckungsebene des flächig ringförmig ausgebildeten Anlagebereiches steht, ein Diffusor in den Innenraum des Gassacks ab, der die Einströmöffnung des Gassackes vom Innenraum her kappenförmig überdeckt. Der Diffusor weist eine Mehrzahl von Durchgangsöffnungen auf, die zum Verwirbeln des durch die Einströmöffnung in den Gassack eingeleiteten Gases dienen.

In einer besonders bevorzugten Variante der Erfindung ist der zweite Komponententeil des Befestigungsmittels durch eine Mehrzahl von entlang der Erstreckungsrichtung vom Anlagebereich abstehender Bolzen gebildet, die durch eine entsprechende Mehrzahl an Durchgangsöffnungen des Gassackes und mit den Durchgangsöffnungen fluchtenden Öffnungen der Schutzhülle geführt sind und aus dem durch die Schutzhülle umgebenen Raum abschnittsweise hinausragen. Vorzugsweise weisen diese Bolzen (oder der zumindest eine Bolzen) zum Befestigen des Gassackpakets an einem Träger des Gassackpakets ein Außengewinde auf, auf das eine Mutter geschraubt werden kann. Alternativ hierzu können diese Bolzen natürlich auch dergestalt ausgebildet sein, dass sie mit einer entsprechenden Ausnehmung an einem Träger des Gassackpaketes eine Rastverbindung eingehen können. Weiterhin können die Bolzen auch als Niete ausgebildet sein.

Weitere Einzelheiten und Vorteile der Erfindung werden bei der nachfolgenden Beschreibung von Ausführungsbeispielen anhand der Figuren deutlich werden.

Es zeigen:
- Fig. 1: ein erstes Ausführungsbeispiel eines Airbagmoduls mit einem innerhalb eines zu einem Airbagpaket gefalteten Gassackes angeordneten Gasgenerator und einer das Gaspaket und den Gasgenerator umgebenden flexiblen Schutzhülle;
- Fig. 2: eine erste Abwandlung des Ausführungsbeispieles aus Fig. 1;
- Fig. 3: eine zweite Abwandlung des Ausführungsbeispieles aus Fig. 1;
- Fig. 4: eine dritte Abwandlung des Ausführungsbeispieles aus Fig. 1;

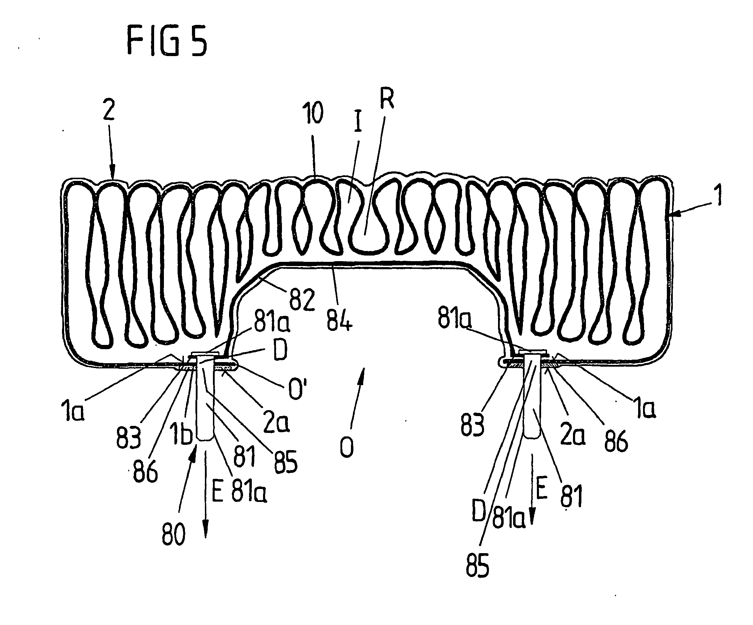

- Fig.5: eine schematische Schnittansicht einer zweiten Ausführungsform mit einem zu einem Gassackpaket zusammengelegten Gassack, der von einer Schutzhülle eng umschlossen ist, und einem im Innenraum des Gassackes angeordneten Diffusor, mit einem Anlagebereich zur Anlage an einem eine Einströmöffnung des Gassackes berandenden Randbereich, wobei vom Anlagebereich eine Mehrzahl von Bolzen abstehen, die durch Durchgangsöffnungen des Gassackes und durch mit diesen Durchgangsöffnungen fluchtenden Öffnungen der Schutzhülle geführt sind und dabei aus einem von der Schutzhülle umgebenen Raum hinausragen;

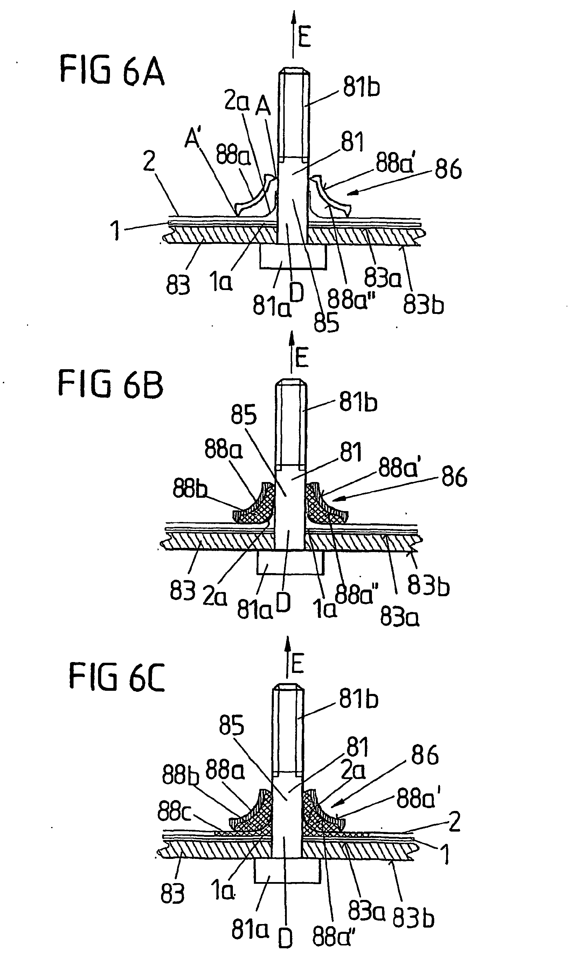

- Fig. 6A: eine ausschnitthafte Schnittansicht eines Befestigungsmittels der in der Fig. 5 gezeigten Art, mit einem ersten Komponententeil, der einen Anlagebereich aufweist und einem vom ersten Komponententeil abragenden zweiten Komponententeil in Form eines Bolzens, der entlang einer Erstreckungsrichtung durch eine Durchgangsöffnung eines am Anlagebereich anliegenden Teiles eines Gassackes und durch eine mit dieser Durchgangsöffnung korrespondierende Öffnung der Schutzhülle geführt ist, so dass er aus dem von der Schutzhülle umgebenen Raum hinausragt, wobei zum gasdichten Verschließen der Öffnung der Schutzhülle ein selbstklemmendes Dichtelement vorgesehen ist;
- Fig. 6B: eine ausschnitthafte Schnittansicht einer Abwandlung des in der Fig. 6A gezeigten Dichtelementes;
- Fig. 6C: eine ausschnitthafte Schnittansicht einer weiteren Abwandlung des in der Fig. 6A bzw. 6B gezeigten Dichtelementes;
- Fig. 7A: eine ausschnitthafte schematische Schnittansicht des in den Figuren 5 bis 6C gezeigten Befestigungsmittels, wobei die vom zweiten Komponententeil des Befestigungsmittels durchgriffene Öffnung der Schutzhülle mittels eines ringförmigen Dichtelementes abgedichtet ist;
- Fig. 7B: eine ausschnitthafte Schnittansicht einer Abwandlung des in der Fig. 7A gezeigten Dichtelementes;
- Fig. 8A: eine ausschnitthafte, schematische Schnittansicht eines Befestigungsmittels der in den Figuren 5 bis 7B gezeigten Art, wobei die Öffnung der Schutzhülle, aus der der zweite Komponententeil des Befestigungsmittels aus dem von der Schutzhülle umgebenen Raum hinausragt, mittels eines schlauchförmigen Dichtelementes abgedichtet ist;
- Fig. 8B: eine Schnittansicht einer Abwandlung des in der Fig. 8A gezeigten Dichtelementes;
- Fig. 9A: eine ausschnitthafte Schnittansicht eines Befestigungsmittels der in den Figuren 5 bis 8B gezeigten Art, wobei die Öffnung der Schutzhülle mittels eines Dichtelementes in Form eines Pressverbandes abgedichtet ist;
- Fig.9B: eine Schnittansicht einer Abwandlung des in der Fig. 9A gezeigten Dichtelementes;
- Fig. 9C: eine Schnittansicht einer Abwandlung der in der Fig. 9A bzw. 9B gezeigten Dichtungsanordnung;
- Fig. 10A: eine ausschnitthafte Schnittansicht des in den Figuren 5 bis 9C gezeigten Befestigungsmittels, wobei ein die Öffnung umgebener Randbereich der Schutzhülle zum Abdichten der vom zweiten Komponententeil des Befestigungsmittels durchgriffenen Öffnung der Schutzhülle als Dichtelement ausgebildet ist;
- Fig. 10B: eine Schnittansicht einer Abwandlung des in der Fig. 10A gezeigten Dichtelementes;
- Fig. 10C: eine weitere Abwandlung des in der Fig. 10A gezeigten Dichtelementes;
- Fig. 10D: eine weitere Abwandlung des in der Fig. 10A gezeigten Dichtelementes;
- Fig. 11A: eine ausschnitthafte Schnittansicht des in den Figuren 5 bis 10D gezeigten Befestigungsmittels, wobei die vom zweiten Komponententeil des Befestigungsmittels durchgriffene Öffnung der Schutzhülle mittels eines Dichtelementes abgedichtet ist, das als eine Beschichtung des Anlagebereiches bzw. als ein separates thermoplastisches Element ausgebildet ist;
- Fig. 11 B: eine Schnittansicht einer Abwandlung des in der Fig. 11A gezeigten Dichtelementes.

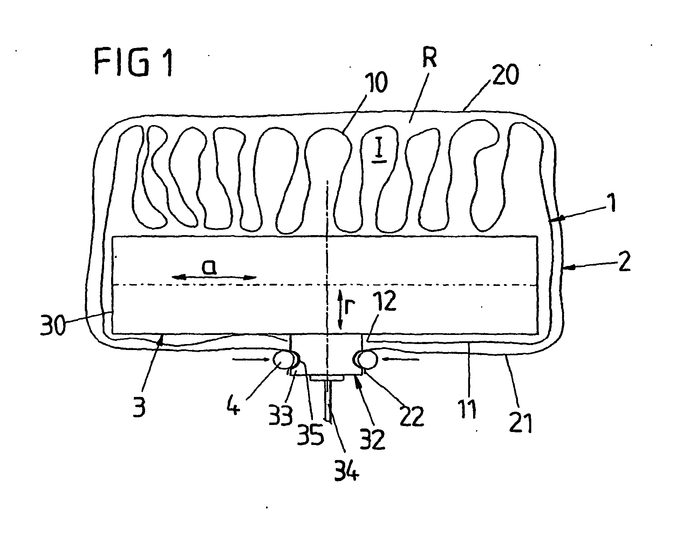

In Figur 1 ist ein Airbagmodul für Kraftfahrzeuge dargestellt, das eine zu einem Gassackpaket 10 gefalteten Gassack 1 umfasst, der in einem Crashfall zum Schutz eines Fahrzeuginsassen mittels eines Gasgenerators 3 zur Bildung eines Gaskissens aufblasbar ist.

Bei dem Gasgenerator 3 handelt es sich um einen so genannten Rohrgasgenerator mit einem rohrförmigen Generatorkörper 30 und einer vom Mantel des Generatorkörpers 30 abstehenden Zündeinrichtung 32, die aus einem formstabilen, von einem metallischen Gehäuse umgebenen Zündelement (Zünder 33) und einem hiervon abgehenden elektrischen Zündkabel 34 besteht, das direkt oder über eine Steckverbindung mit dem Zünder 33 verbunden sein kann.

Der Gasgenerator 3 ist innerhalb des gefalteten Gassackes 1 angeordnet, wobei die zu einem Gassackpaket 10 gefalteten Bereiche des Gassackes 1 vor einem Teil der Mantelfläche des Generatorkörpers 30 liegen, und die beiden Stirnseiten sowie die übrigen Bereiche der Mantelfläche des Gasgenerators von einer ungefalteten Lage 11 des Gassackes 1 umschlossen sind. In seiner ungefalteten Lage 11 weist der Gassack 1 eine Öffnung 12 auf, durch die hindurch der Zünder 33 der Zündeinrichtung 32 aus dem vom Gassack 1 umschlossenen Innenraum I hinausragt und dort mit einem Zündkabel 34 verbunden ist.

Der Gassack 1 und der Gasgenerator 3 sind von einer flexiblen Schutzhülle 2 - gebildet durch eine beim Aufblasen und Entfalten des Gassackes 1 zerreißbare Folie - gasdicht umschlossen. Dies bedeutet, dass der Gassack unter Verwendung von Unterdruck, vergleiche DE 101 14 208 A1 und DE 10 2004 056 128, zu einem besonders kompakten Gassackpaket zusammengelegt und anschließend in dieser kompakten Form innerhalb der gasdichten Schutzhülle erhalten bleiben kann.

Die Schutzhülle 2 weist im Bereich des in radialer Richtung r von der Mantelfläche des Generatorkörpers 30 abragenden Zünders 33 eine Öffnung 22 auf, durch die hindurch der Zünder 33 aus dem von Schutzhülle 2 umschlossenen Raum R hinausragt, wobei diese Öffnung 22 mittels eines Dichtelementes 4 in Form eines elastischen Dichtringes gasdicht abgedichtet ist. Der Dichtring 4 ist hierzu derart auf den Zünder 33 der Zündeinrichtung 32 aufgesetzt, dass er den Rand der Öffnung 22 der flexiblen Schutzhülle 2, der auch als Randbereich ausgebildet sein kann, nach innen gegen den Zünder 33 drückt. Hierbei ist das Dichtelement 4 in Form eines Dichtringes gemeinsam mit dem zugeordneten Randbereich der flexiblen Schutzhülle 2, der auch als zweiter Randbereich bezeichnet wird, in einer ringförmig umlaufenden Aussparung 35 des Zünders 33 aufgenommen. Der Rand der Öffnung 22 der flexiblen Schutzhülle 2 liegt somit unter Vorspannung fest an einem einen Stützbereich bildenden Zünder 33 an, so dass durch die Öffnung 22 hindurch keine Luft in den mit Unterdruck beaufschlagten, von der flexiblen Schutzhülle 2 umschlossenen Raum R eindringen kann.

Zur Montage der in Fig. 1 gezeigten Anordnung werden zunächst der Gassack 1 und der Gasgenerator 3 in die flexible Schutzhülle eingebracht und von dieser umschlossen und das gesamte Paket durch Erzeugung von Unterdruck auf ein minimales Packmaß reduziert. Anschließend wird das Dichtelement 4 auf den Zünder 33 bzw. in dessen umlaufende Aussparung 35 gesetzt und sodann die Schutzhülle 2 im Bereich des Zünders 33 zur Bildung einer Öffnung 22 durchstoßen, so dass der Zünder 33 mit dem zugeordneten Zündkabel 34, z. B. durch Aufstecken des Zündkabels, elektrisch verbunden werden kann.

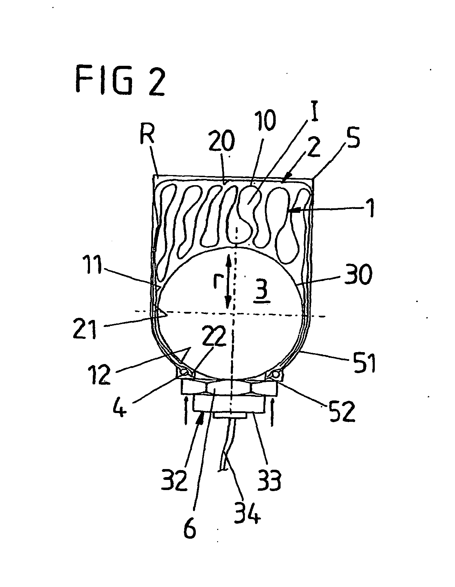

Figur 2 zeigt in einem Querschnitt eine Abwandlung des Airbagmoduls aus Figur 1, bei der der zu einem Gassackpaket 10 gefaltete Gassack 1, der Gasgenerator 3 und die den Gassack 1 und den Gasgenerator 3 umgebende flexible Schutzhülle 2 in einem Modulgehäuse 5 angeordnet sind. Ein unterer Abschnitt 51 des Modulgehäuses 5 umgibt dabei denjenigen Bereich des Airbagmoduls, in dem sich eine Lage 11 des Gassackes 1 entlang des Generatorkörpers 30 erstreckt und in dem ein Zünder 33 einer Zündeinrichtung 32 miteinander fluchtende Öffnungen 12, 22 im Gassack 1 einerseits und in der flexiblen Schutzhülle 2 andererseits durchgreift. Das Modulgehäuse 5 weist in diesem Abschnitt ebenfalls eine Öffnung 52 auf, die vom Zünder 33 des Gasgenerators 3 durchgriffen wird. Am Rand dieser Öffnung 52 des Modulgehäuses 5 ist das ringförmige

Dichtelement 4 angeordnet, welches die Öffnung 22 in der flexiblen Schutzhülle dichtend verschließt. Hierzu ist der Dichtring 4 derart angeordnet und elastisch vorgespannt, dass er den Rand der Öffnung 22 in der flexiblen Schutzhülle 2 gegen den Generatorkörper 30 des Gasgenerators 3 verspannt. Der Rand (Randbereich) der Öffnung 22 der flexiblen Schutzhülle liegt somit unter Vorspannung fest am einen Stützbereich bildenden Generatorkörper 30 an, so dass durch diese Öffnung hindurch keine Luft in den mit unter Druck beaufschlagten, von der flexiblen Schutzhülle 2 umschlossenen Raum R eindringen kann.

In Figur 2 ist ferner eine Mutter 6 erkennbar, die auf ein Außengewinde des Zünders 32 geschraubt ist und mittels der der Gasgenerator 3 am Modulgehäuse festgelegt ist. Der Dichtring 4 ist dabei derart im Bereich der Mutter 6 am Modulgehäuse 5 angeordnet, dass durch Festziehen der Mutter 6 der Dichtring und somit auch den Rand der Öffnung 22 der flexiblen Schutzhülle 2 dichtend gegen den Generatorkörper 30 gedrückt werden.

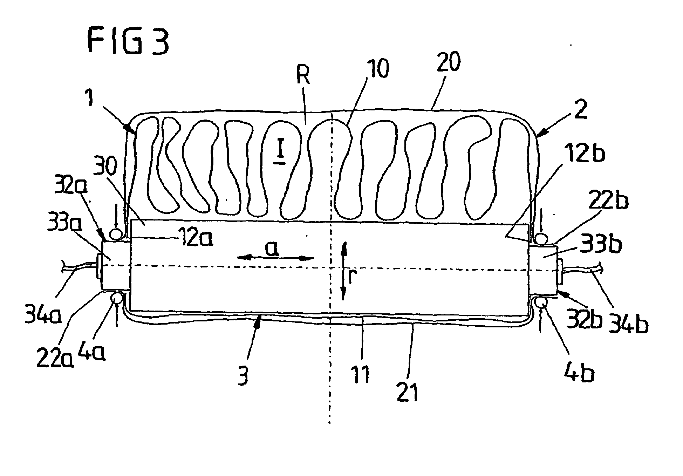

Figur 3 zeigt eine Abwandlung der Airbagmodule aus den Figuren 1 und 2 mit einem zweistufigen Gasgenerator 3 in Form eines Rohrgasgenerators, der an jeder seiner beiden Stirnseiten eine in axialer Richtung a abstehende Zündeinrichtung 32A bzw. 32B mit einem Zünder 33A, 33B und einem Zündkabel 34A, 34B versehen ist. Sowohl der den Gasgenerator 3 umgebende Gassack 1 als auch die den Gassack 1 und den Gasgenerator 3 gasdicht umschließende flexible Schutzhülle 2 weisen im Bereich der Zündeinrichtungen 32A, 32B jeweils eine Öffnung 12A, 22A bzw. 12B, 22B auf, durch die hindurch jeweils einer der Zünder 33A, 33B aus dem von der flexiblen Schutzhülle 2 umschlossenen Raum R hinausragt und dort mit jeweils einem Zündkabel 34A bzw. 34B kontaktiert ist.

Die beiden Öffnungen 22A, 22B der flexiblen Schutzhülle im Bereich der Zünder 33A bzw. 33B sind durch jeweils einen Dichtring 4A bzw. 4B verschlossen. Der jeweilige Dichtring 4A, 4B umgreift den jeweils zugeordneten Zünder 33A bzw. 33B unter Zwischenlage des Randes der zugeordneten Öffnung 22A bzw. der flexiblen Schutzhülle 2 und ist dabei jeweils derart radial (bezogen auf die Ringstruktur des Dichtungselementes 4A bzw. 4B nach innen vorgespannt, dass er den Rand der jeweiligen Öffnung 22A, 22B der flexiblen Schutzhülle 2 gegen den jeweils zugeordneten Zünder 33A bzw. 33B drückt und hierdurch die entsprechende Öffnung 22A bzw. 22B der flexiblen Schutzhülle 2 abdichtet.

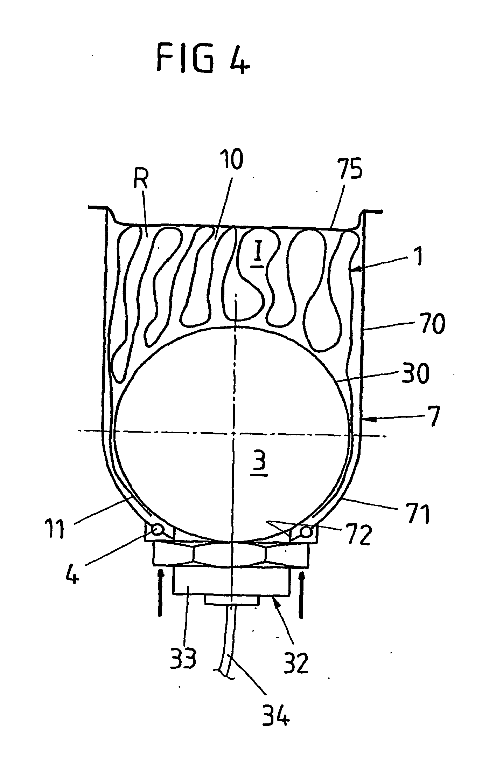

In Figur 4 ist eine Abwandlung des Airbagmoduls aus Figur 2 dargestellt, bei der die den Gassack 1 und den Gasgenerator 3 umgebende Schutzhülle 7 aus einer gehäuseartigen, im Wesentlichen formstabilen (allenfalls elastischen) Hülle 70 und einer flexiblen Hülle 75 besteht. Die folienartige, flexible Hülle 75 dient dabei zur Abdeckung einer Deckfläche der gehäuseartigen Hülle 70, die den Gassack 1 und den Gasgenerator 3 umschließt und in einem Abschnitt 71 die Öffnung 72 bildet, durch die hindurch die Zündeinrichtung 32 aus dem von der Schutzhülle 7 umschlossenen Raum R hinausragt.

Das Dichtelement 4 in Form eines Dichtringes wirkt in diesem Fall derart auf einen Abschnitt 71 der gehäuseartigen Hülle 70 am Rand der Öffnung 72 ein, dass jener Rand der Öffnung 72 gegen den Generatorkörper 30 gedrückt und hierdurch die Öffnung 72 gasdicht verschlossen wird. Hierzu ist eine gewisse Elastizität der bevorzugt aus Kunststoff bestehenden Hülle 70 erforderlich.

Bei dem in Figur 4 dargestellten Airbagmodul erfolgt die Evakuierung des von der Schutzhülle 7 umschlossenen Raumes R bevorzugt nach dem Einbringen des Gassackes 1 und des Gasgenerators 3 in die gehäuseartige Hülle 70 und das anschließende gasdichte Verschließen der gehäuseartigen Hülle 70 auf einer Seite (hinsichtlich der Öffnung 72) mittels des Dichtelementes 4 und auf der anderen Seite (Deckfläche) mittels der flexiblen Hülle 75. Die Evakuierung kann z.B. durch eine (in Figur 4 nicht dargestellte) Öffnung in der gehäuseartigen Hülle 70 erfolgen, die anschließend gasdicht verschlossen wird. Alternativ ist eine Evakuierung im Verbindungsbereich zwischen flexibler Hülle 75 und gehäuseartiger Hülle 70 möglich, und zwar unmittelbar vor dem vollständigen Verbinden jener beiden Komponenten 70, 75 der Schutzhülle 7.

Figur 5 zeigt eine schematische Schnittansicht eines Gassackpakets 10 der in der Figur 1 gezeigten Art, wobei im Unterschied zur Figur 1 ein zum Aufblasen des Gassackes 1 verwendeter Gasgenerator (Gasgenerator 3 der Figur 1) nicht innerhalb des vom Gassack 1 umgebenen Innenraums I angeordnet ist, sondern außerhalb einer das Gassackpaket 10 umgebenen Schutzhülle 2, die das Gassackpaket 10 entsprechend der Figur 1 eng umgibt. Die Schutzhülle besteht zumindest teilweise, vorzugsweise vollständig, aus einem flexiblen Material, beispielsweise einem Kunststoff. Bei dem Kunststoff kann es sich auch um einen thermoplastischen Kunststoff handeln. Vorzugsweise ist die Schutzhülle als Schutzfolie ausgebildet.

Zum Befestigen des Gassackpakets 10 ist ein Befestigungsmittel 80 vorgesehen, mit einem im Innenraum I des Gassackes 1 angeordneten ersten Komponententeil 82 und einem aus dem von der Schutzhülle 2 umgebenen Raum R (und dem Innenraum I) herausgeführten zweiten Komponententeil 81, über den das Gassackpaket 10 an einem Träger (Modulträger) befestigt ist. Der Träger des Gassackpakets 10 kann natürlich auch als ein Kraftfahrzeugteil, z.B. in Form eines Nabenkörpers eines Lenkrades oder einer Instrumententafel, ausgebildet sein.

Der Gassack 1 ist durch eine Einströmöffnung O mit Gas aufblasbar. Dieses kann durch einen Gasgenerator 3 der in den Figuren 1 bis 4 gezeigten Art bereitgestellt werden. Die Einströmöffnung O ist durch einen als dritten Randbereich O' bezeichneten Randbereich berandet, an dem vom Innenraum I des Gassackes 1 her ein Anlagebereich 83 des ersten Komponententeils 82 des Befestigungsmittels 80 flächig anliegt. Der Anlagebereich 83 ist dabei als ein Haltering ausgebildet, der die Einströmöffnung O des Gassackes 1 umläuft. Von diesem Anlagebereich 83 steht ein kappenförmiger Diffusor 82 in den Innenraum I des Gassackes 1 ab, der eine Mehrzahl an Durchgangsöffnungen aufweist (in der Figur 5 nicht dargestellt), durch die in die Einströmöffnung O eingeleitete Gase in den Innenraum I des Gassackes 1 strömen können, wobei sie verwirbelt werden.

Der zweite Komponententeil des Befestigungsmittels 80 ist durch eine Mehrzahl von entlang einer Erstreckungsrichtung E längs erstreckten Bolzen 81 gebildet, die entlang der Erstreckungsrichtung E vom Anlagebereich 83 abstehen, wobei die Erstreckungsrichtung E senkrecht auf einer Erstreckungsebene steht, in der der Anlagebereich 83 die Einströmöffnung O des Gassackes 1 umläuft. Die Bolzen 81 können einstückig mit dem Anlagebereich 83 ausgebildet sein. Alternativ hierzu können die Bolzen 81 an jeweils einem freien Ende einen im Querschnitt verbreiterten Kopf 81a aufweisen und entlang der Erstreckungsrichtung E durch jeweils eine Durchgangsöffnung des Anlagebereiches 83 geführt sein, so dass der verbreiterte Kopf 81a mit einer dem Anlagebereich 83 zugewandten Seite auf einem die jeweilige Durchgangsöffnung des Anlagebereiches 83 berandenden Randbereich der Durchgangsöffnung aufliegt. Zusätzlich kann ein derartiger Kopf 81a mit dem Anlagebereich 83 dauerhaft verbunden, beispielsweise verschweißt sein.

Zum Herausführen der Bolzen 81 aus dem vom Gassack 1 umgebenen Innenraum I sowie aus dem von der Schutzhülle 2 umgebenen Raum R, in dem das Gassackpaket 10 angeordnet ist, sind am dritten Randbereich O' des Gassackes 1 Durchgangsöffnungen D und korrespondierende Öffnungen 85 der Schutzhülle 2 vorgesehen. Durch diese jeweils paarweise deckungsgleichen Öffnungen D, 85 ragen die Bolzen 81 aus dem von der Schutzhülle 2 umgebenen Raum R entlang der Erstreckungsrichtung E hinaus.

Zum gasdichten Abdichten (Verschließen) der Öffnungen 85 der Schutzhülle 2 derart, dass der in der Schutzhülle 2 herrschende Unterdruck aufrecht erhalten wird, sind Dichtmittel 86 vorgesehen, die entlang der Erstreckungsrichtung E zwischen jeweils einem ersten, eine Durchgangsöffnung D berandenden Randbereich 1 a des Gassackes 1 und einem entsprechenden, die jeweilige Öffnung 85 der Schutzhülle 2 berandenden, zweiten Randbereich 2a der Schutzhülle angeordnet sind. Dabei umläuft ein Dichtungselement 86 den jeweiligen Bolzen 81 quer zur Erstreckungsrichtung E ringförmig, d.h., das jeweilige Dichtungselement 86 umgibt den jeweiligen Bolzen 81 im Querschnitt. Die Dichtungselemente 86 müssen allerdings nicht notwendigerweise zwischen der Schutzhülle 2 und dem Gassack 1 angeordnet sein.

Bei dem in der Figur 5 gezeigten Airbagmodul ist der Gasgenerator (in der Figur 5 nicht gezeigt) außerhalb des Gassackpakets 10, und zwar außerhalb des von der Schutzhülle umgebenen Raumes R, angeordnet. Es ist natürlich auch möglich, einen zum Aufblasen des Gassackes 1 benötigten Gasgenerator im Innenraum I des Gassackes 1 bzw. im Raum R der Schutzhülle 2 anzuordnen. Da bei dem in der Figur 5 gezeigten Airbagmodul der Gasgenerator außerhalb des Raumes R der Schutzhülle 2 anzuordnen ist, wird beim Aufblasen des Gassackes 1 derjenige Komponententeil der Schutzhülle 2, der von einer dem Raum R abgewandten Seite der Schutzhülle her den Diffusor 84 bedeckt, beim Aufblasen des Gassackes 1 durch die heißen Gase oder einen alternativen Mechanismus zerstört. Aufgrund der in den Innenraum I hineinragenden Form des Diffusors 84 werden etwaige Verbrennungsrückstände des besagten Bereiches der Schutzhülle 2 in den Innenraum des Gassackes 1 geschleudert.

Figur 6A zeigt eine ausschnitthafte Schnittdarstellung eines Teiles des in der Figur 5 gezeigten Airbagmoduls, und zwar einen Abschnitt des Anlagebereiches 83 des Befestigungsmittels 80, mit einem in Erstreckungsrichtung E abragenden Bolzen 81. Dieser durchstößt entlang der Erstreckungsrichtung E eine Durchgangsöffnung D des Gassackes 1 sowie eine entlang der Erstreckungsrichtung E darüber liegende Öffnung 85 der Schutzhülle 2. Der Anlagebereich 83 weist eine Anlageseite 83a auf, an der ein Abschnitt des Gassackes 1 anliegt, der nach einem Festlegen des Befestigungsmittels 80 an einem Träger des Airbagmoduls entlang der Erstreckungsrichtung E zwischen der Anlageseite 83a und einem flächigen Bereich des Trägers eingeklemmt ist, sowie eine der Anlageseite 83a abgewandte Seite 83b, von der der Diffusor 84 in den Innenraum I des Gassackes 1 absteht.

Der Gassack 1 wird von der Schutzhülle 2 umschlossen, so dass der Gassack im Bereich des Bolzens 81 entlang der Erstreckungsrichtung E zwischen der Anlageseite 83a des Anlagebereiches 83 und der Schutzhülle 2 angeordnet ist.

Zum Abdichten der Öffnung 85 der Schutzhülle 2 derart, dass durch die Öffnung 85 keine Luft (Gas) in den von der Schutzhülle 2 umgebenden Raum R gelangen kann, ist ein Dichtungselement 86 vorgesehen, das im Unterschied zur Figur 5 als ein selbstklemmendes Federelement 88a ausgebildet ist, welches vorzugsweise aus einem Metall oder einem Kunststoff hergestellt ist. Das Federelement 88a weist die Form eines konusförmigen Mantels auf, der den Bolzen 81 quer zur Erstreckungsrichtung E vollständig umgibt und einen sich entgegen der Erstreckungsrichtung E zum Anlagebereich 83 hin aufweitenden Querschnitt aufweist (bezogen auf eine senkrecht zur Erstreckungsrichtung E orientierte Querschnittsebene) derart, dass eine dem Bolzen 81 abgewandte Außenseite 88a' des konusmantelförmigen Federelementes 88a eine konkave Krümmung aufweist bzw. die der Außenseite 88a' abgewandte Innenseite 88a" des Federelementes 88a eine entsprechende konvexe Krümmung.

Das Federelement 88a weist entlang der Erstreckungsrichtung E ein erstes, dem Anlagebereich 83 des Befestigungsmittels abgewandtes Ende sowie ein zweites, dem Anlagebereich 83 zugewandtes Ende auf. Am ersten Ende des Federelementes 88a ist dabei eine Kante A ausgebildet, die den Bolzen 81 quer zur Erstreckungsrichtung E umläuft und unter Vorspannung linienförmig am Bolzen 81 anliegt, d.h., das Federelement 88a übt quer zur Erstreckungsrichtung E eine Kraft auf den Bolzen 81 aus. Am zweiten Ende des Federelementes 88a ist eine zweite Kante A' ausgebildet, die den Bolzen 81 quer zur Erstreckungsrichtung E beabstandet umläuft und unter Vorspannung an einem die Öffnung 85 der Schutzhülle 2 umrandenden Randbereich 2a der Schutzhülle 2 anliegt, so dass dieser zweite Randbereich 2a entgegen der Erstreckungsrichtung E unter Zwischenlage des Gassackes 1 gegen die Anlageseite 83a des Anlagebereiches 83 des Befestigungsmittels gedrückt wird. Hierdurch wird die Öffnung der Schutzhülle 2 derart abgedichtet, dass keine Luft in den Raum R der Schutzhülle 2 gelangen kann. Zum Erzeugen der Vorspannung, mit der das Federelement 88a entgegen der Erstreckungsrichtung E die Schutzhülle 2 gegen den Anlagebereich 83 drückt, muss das Federelement 88a lediglich entgegen der Erstreckungsrichtung E auf den Bolzen 81 aufgeschoben werden, und entgegen der Erstreckungsrichtung E gegen die Schutzhülle 2 (und somit gegen den Anlagebereich 83) gedrückt werden. Da das Federelement 88a gleichzeitig quer zur Erstreckungsrichtung E gegen den Bolzen 81 vorgespannt ist, ist das Federelement 88a entlang der Erstreckungsrichtung E derart fixierbar, dass die Vorspannung des Federelementes 88a gegen die Schutzhülle 2 bzw. den Anlagebereich 83 aufrechterhalten wird.

Der Betrag der Vorspannung gegen den Anlagebereich 83 bestimmt sich dabei aus der Rückstelleigenschaft des Federelementes 88a sowie der Kraft, mit der das Federelement 88a entgegen der Erstreckungsrichtung E gegen den Anlagebereich 83 des Befestigungsmittels gedrückt wird. Entsprechend dieser Kraft wird nämlich die konkave bzw. konvexe Krümmung des Mantels des Federelementes 88a verstärkt, und die entsprechenden Rückstellkräfte über die erste Kante A bzw. die zweite Kante A' in den Bolzen 81 bzw. den Anlagebereich 83 (unter Zwischenlage der Schutzhülle 2 sowie des Gassackes 1) eingeleitet.

Zur Verbesserung der Dichtwirkung ist die Schutzhülle 2 im Bereich der Öffnung 85 der Schutzhülle 2 derart ausgebildet, dass der zweite Randbereich 2a der Schutzhülle 2, der die Öffnung 85 der Schutzhülle 2 begrenzt, abschnittsweise eng am Bolzen 81 anliegt und diesen ringförmig umgreift.

Figur 6B zeigt eine Abwandlung des in der Figur 6A gezeigten Dichtelementes 86, wobei im Unterschied zur Figur 6A zusätzlich zu dem Federelement 88a das Dichtelement 86 eine Dichtmasse 88b aufweist, die in einem Freiraum angeordnet ist, der durch die Innenseite 88a" des Federelementes 88a sowie durch die Schutzhülle 2 und den Bolzen 81 begrenzt ist. Die Dichtmasse 88b umgreift dabei den Bolzen 81 quer zur Erstreckungsrichtung E und ist insbesondere verformbar (pastös) ausgebildet, so dass sie der Rückstellfähigkeit (Elastizität) des Federelementes 88a nicht entgegensteht. Die Dichtmasse 88b füllt den Freiraum vollständig aus und liegt dabei abschnittsweise an einem aus der Schutzhülle 2 durch die Öffnung 85 hinausragenden Abschnitt des Bolzens 81 an. Hierdurch wird die Öffnung 85 der Schutzhülle 2 zusätzlich abgedichtet. Da die Dichtmasse 88b den besagten Freiraum vollständig ausfüllt, dient sie auch zur Übertragung der Federkraft des Federelementes 88a auf den zweiten Randbereich 2a der Schutzhülle 2, der hierbei gleichmäßig sowohl gegen den Bolzen 81 als auch gegen die Anlageseite 83a des Anlagebereiches 83 (unter Zwischenlage des Gassacks 1) gedrückt wird.

Figur 6C zeigt eine weitere Abwandlung des in der Figur 6A bzw. Figur 6B gezeigten Dichtelementes 86, wobei im Unterschied zur Figur 6B zusätzlich zur Dichtmasse 88b eine weitere Dichtmasse 88c entlang der Erstreckungsrichtung E zwischen dem zweiten Randbereich 2a der Schutzhülle 2 und dem ersten Randbereich 1a des Gassackes 1 angeordnet ist. Hierdurch wird die Dichtigkeit des Dichtelementes 86 weiter verbessert, da hierdurch entlang der Erstreckungsrichtung E ein längerer Abschnitt des Bolzens 81 durch die Dichtmasse bedeckt ist. Zudem wird hierbei ein größerer Bereich des zweiten Randbereiches 2a der Schutzhülle 2 sowie ein größerer Bereich des ersten Randbereiches 1a des Gassackes 1 durch die Dichtmasse 88b, 88c bedeckt, so dass der Eintritt von Luft durch die Öffnung 85 in den Raum R der Schutzhülle 2 effektiv erschwert wird.

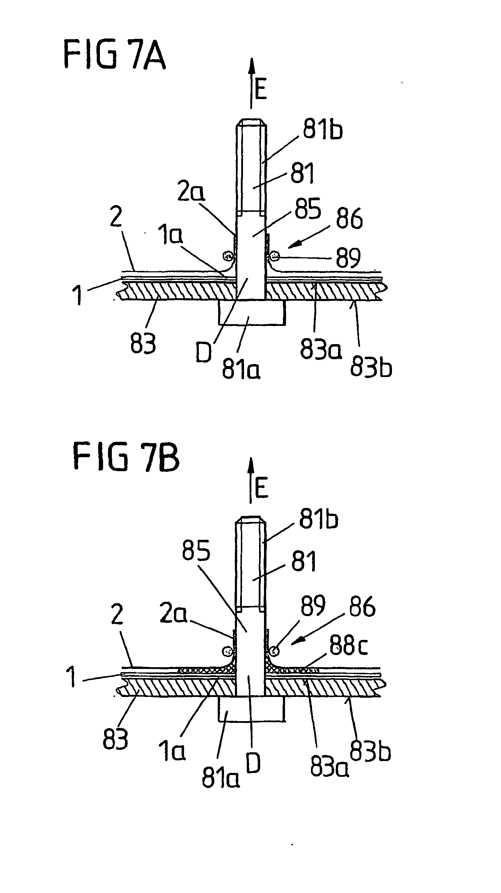

Figur 7A zeigt eine Abwandlung des in der Figur 6A gezeigten Dichtelementes 86, wobei im Unterschied zur Figur 6A das Dichtelement 86 nicht durch ein Federelement 88a gebildet ist, sondern durch einen O-Ring 89 aus einem flexiblen Material, der zum gasdichten Verschließen der Öffnung 85 entgegen der Erstreckungsrichtung E über den Bolzen 81 und den am Bolzen 81 anliegenden zweiten Randbereich 2a gestreift ist, so dass er den zweiten Randbereich 2a der Schutzhülle 2 quer zur Erstreckungsrichtung E gegen den Bolzen 81 drücken kann. Hierzu ist der O-Ring 89 gegen den am Bolzen 81 anliegenden zweiten Randbereich 2a der Schutzhülle 2 vorgespannt. Das Maß der Vorspannung wird dabei durch das Material des O-Rings sowie durch den Grad der Dehnung des O-Ringes bestimmt, der sich beim Aufziehen des O-Ringes auf den Bolzen 81 einstellt.

Figur 7B zeigt den in der Figur 7A dargestellten O-Ring des Dichtelementes 86, wobei zusätzlich zu dem O-Ring 89 eine Dichtmasse 88c vorgesehen ist, die entsprechend der Figur 6C entlang der Erstreckungsrichtung E zwischen dem zweiten Randbereich 2a der Schutzhülle 2 und dem ersten, die Durchgangsöffnung D des Gassackes berandenden Randbereich 1a des Gassackes 1 angeordnet ist. Dabei füllt die pastöse Dichtmasse 88c einen den Bolzen 81 quer zur Erstreckungsrichtung E umgebenden Bereich, der sich entlang der Erstreckungsrichtung E zwischen dem zweiten Randbereich 2a und dem ersten Randbereich 1 a erstreckt, vollständig aus, wobei die Dichtmasse 88c am zweiten und am ersten Randbereich 2a, 1a sowie an einem Abschnitt des Bolzens 81 absichtend anliegt, der sich entlang der Erstreckungsrichtung E vom Randbereich 1a bis etwa zum O-Ring 89 erstreckt.

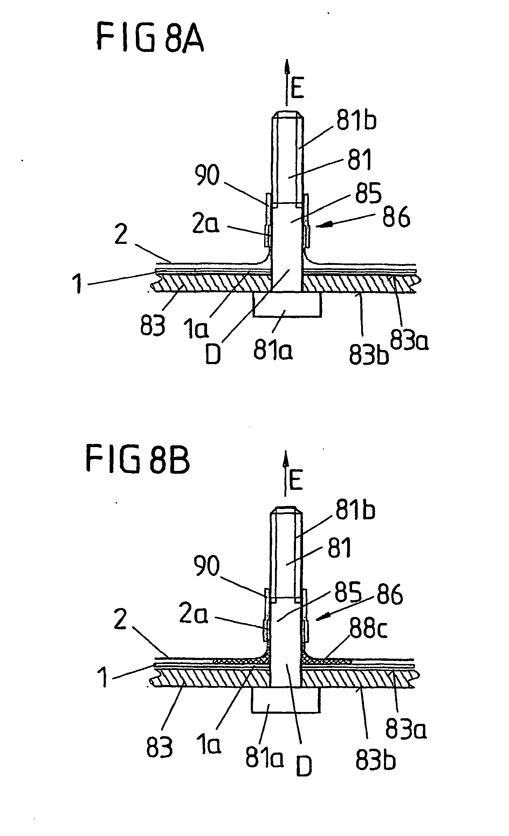

Figur 8A zeigt eine Abwandlung der in der Figur 7A gezeigten Dichtungsanordnung, wobei im Unterschied zur Figur 7A das Dichtungselement 86 nicht durch einen O-Ring 89, sondern durch einen flexiblen Schlauch 90 gebildet ist, der entlang der Erstreckungsrichtung E über den am Bolzen 81 anliegenden zweiten Randbereich 2a der Schutzhülle 2 gezogen ist, wobei der Schlauch 90 derart beschaffen ist, dass er dabei quer zur Erstreckungsrichtung E gegen den Bolzen 81 vorgespannt ist, so dass er, eng am zweiten Randbereich 2a anliegend, diesen quer zur Erstreckungsrichtung E gegen den Bolzen 81 drücken kann. Hierdurch wird die vom zweiten Randbereich 2a berandete Öffnung 85 der Schutzhülle 2 gasdicht abgedichtet. Bei dem Schlauch kann es sich um einen rückstellfähigen Schlauch oder beispielsweise einen Schrumpfschlauch handeln, der sich beim Erwärmen um den Bolzen 81 zusammenzieht und somit die Vorspannung gegen den Bolzen 81 bereitstellt. Zusätzlich weist der Schlauch 90 entlang der Erstreckungsrichtung E einen Abschnitt auf, der über den zweiten Randbereich 2a hinaussteht und eng am Bolzen 81 anliegt. Hierdurch wird die Dichtigkeit gegenüber einem lediglich am Randbereich 2a anliegenden Schlauch 90 erhöht.

Entsprechend der Figur 7B kann natürlich auch bei einem als Schlauch 90 ausgebildeten Dichtelement 86 eine verformbare Dichtmasse 88c gemäß der Figur 7B (bzw. der Figur 6C) eingesetzt werden, die entsprechend den Figuren 6C und 7B am Bolzen 81 angeordnet ist und die Dichtigkeit des Dichtelementes 86 zusätzlich steigert.

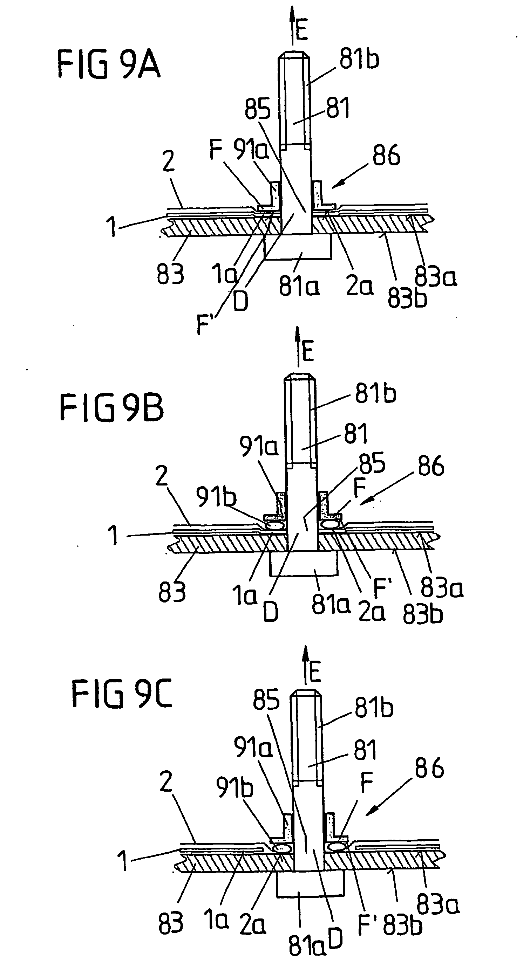

Figur 9A zeigt eine ausschnitthafte Schnittdarstellung einer Abwandlung des in der Figur 6A gezeigten Dichtelementes, dass im Unterschied zur Figur 6A durch einen hohlzylinderförmigen Körper gebildet ist, der eng am Bolzen 81 anliegt und diesen quer zur Erstreckungsrichtung E, d.h. im Querschnitt, umgreift. Der hohlzylinderförmige Körper 91 a besteht vorzugsweise aus einem Metall oder einem Kunststoff und weist an einem dem Anlagebereich 83 zugewandten Ende einen quer zur Erstreckungsrichtung E vom hohlzylinderförmigen Körper 91a abstehenden Bereich F in Form eines Flansches auf, der den Bolzen 81 an einer dem Bolzen 81 abgewandten Seite des hohlzylinderförmigen Körpers 91a ringförmig umläuft. Der Flansch F weist eine dem zweiten Randbereich 2a der Schutzhülle 2 zugewandte erste Seite F' auf, die zur flächigen Anlage am zweiten Randbereich 2a der Schutzhülle 2 vorgesehen und eingerichtet ist.

Zum Abdichten der Öffnung 85 der Schutzhülle 2 wird der hohlzylinderförmige Körper 91a entlang der Erstreckungsrichtung E auf den Bolzen 81 aufgesteckt, so dass er den Bolzen 81 im Querschnitt eng umgreift. Hierbei ist der Innendurchmesser des hohlzylinderförmigen Körpers 91a derart bemessen, dass der Körper 91a im auf den Bolzen 81 aufgesteckten Zustand gegen diesen quer zur Erstreckungsrichtung E vorgespannt ist. Hierdurch ist der hohlzylinderförmige Körper 91a derart am Bolzen 81 festlegbar, dass eine Vorspannung des hohlzylinderförmigen Körpers 91a entgegen der Erstreckungsrichtung E gegen den Anlagebereich 83 (unter Zwischenlage der Schutzhülle 2 des Gassackes 1) aufrechterhalten werden kann. Der hohlzylinderförmige Körper 91a bildet somit einen Pressverband, der mit seiner dem Anlagebereich 83 zugewandten ersten Seite F' des Flansches F den zweiten Randbereich 2a der Schutzhülle 2, der die Öffnung 85a der Schutzhülle 2 begrenzt, unter Zwischenlage des ersten Randbereiches 1a des Gassackes 1 gegen die Anlageseite 83a des Anlagebereiches 83 des Befestigungselementes 80 drückt. Da hierdurch der die Öffnung 85 berandende zweite Randbereich 2a der Schutzhülle 2 sowie der die Durchgangsöffnung D berandende erste Randbereich 1a des Gassackes 1 fest zwischen der ersten Seite F' des Flansches F und der Anlageseite 83a des Anlagebereiches 83 eingespannt werden, wird eine Abdichtung der Öffnung 85 der Schutzhülle 2 erreicht derart, dass keine Luft durch die Öffnung 85 in den von der Schutzhülle 2 umgebenden Raum R eindringen kann. Somit bleibt die durch den Unterdruck in dem Raum R bewirkte vorteilhafte Kompaktheit des Gassackpaketes 10 dauerhaft erhalten.

In einer Weiterbildung gemäß Figur 9B ist zwischen der ersten Seite F' des Flansches F des hohlzylinderförmigen Körpers 91 a und dem zweiten Randbereich 2a der Schutzhülle 2 (entlang der Erstreckungsrichtung E) ein Anlageelement 91 b in Form eines Dichtungsringes vorgesehen (flexibel), der den Bolzen 81 im Querschnitt umläuft und durch den hohlzylinderförmigen Körper 91 a entgegen der Erstreckungsrichtung E gegen den zweiten Randbereich 2a der Schutzhülle 2 gedrückt wird. Dabei wird das Anlageelement 91b entlang der Erstreckungsrichtung E komprimiert, so dass es sich abdichtend an den zweiten Randbereich 2a sowie an die Seite des Flansches F anschmiegt. Auf diese Weise können mittels des Anlageelementes 91b Unebenheiten des zweiten Randbereiches 2a (Falten oder Nähte) bzw. des entlang der Erstreckungsrichtung E darunter liegenden ersten Randbereiches 1a des Gassackes 1 sowie ggf. Unebenheiten der Anlageseite 83a des Anlagebereiches 83 ausgeglichen werden.

Alternativ zu den in den Figuren 9A und 9B gezeigten Dichtungsanordnungen ist entsprechend der in der Figur 9C gezeigten Abdichtung der Öffnung 85 die Durchgangsöffnung D des Gassackes 1 derart großflächig ausgebildet, dass das Anlageelement 91 b den zweiten Randbereich 2a der Schutzhülle 2 ohne Zwischenlage des ersten Randbereiches 1a des Gassacks 1 gegen die Anlageseite 83a des Anlagebereiches 83 drückt. Dies hat zum Vorteil, dass entlang der Erstreckungsrichtung E lediglich der Bereich zwischen der Anlageseite 83a und dem zweiten Randbereich 2a der Schutzhülle 2 abgedichtet werden muss, d.h., es ist lediglich erforderlich, den zweiten Randbereich 2a der Schutzhülle 2 abdichtend gegen den Anlagebereich 83a zu drücken.

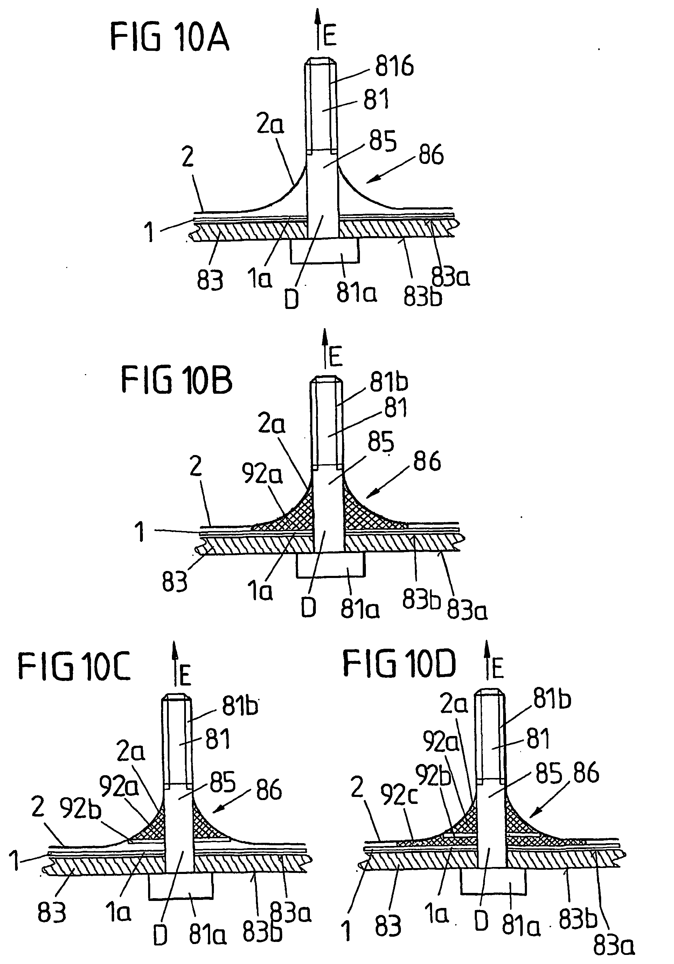

Figur 10A zeigt eine ausschnitthafte Schnittdarstellung einer weiteren Ausführungsform des Dichtelementes 86, bei dem im Unterschied zu den Figuren 6A bis 9c das Dichtelement 86 einstückig mit der Schutzhülle 2 ausgebildet ist, d.h., durch den zweiten Randbereich 2a gebildet ist, der derart ausgebildet ist, dass er sich beim Anlegen eines Unterdruckes im von der Schutzhülle 2 umgebenen Raum R abdichtend an den Bolzen 81 anlegt und diesen im Querschnitt eng umschließt.

Entsprechend der Figur 10B weist das solchermaßen gebildete Dichtungselement 86 zur Steigerung seiner Dichtungswirkung eine zusätzliche Dichtungsmasse 92a auf, die verformbar ausgebildet ist und zwischen dem Randbereich 2a der Schutzhülle 2 und dem ersten Randbereich 1a des Gassackes 1 angeordnet ist derart, dass sie entlang der Erstreckungsrichtung E einen vom ersten Randbereich des Gassackes 1 bis zur Öffnung 85 der Schutzhülle 2 reichenden Abschnitt des Bolzens 81 bedeckt. Aufgrund der Verformbarkeit der Dichtmasse 92a wird diese beim Anlegen eines Unterdruckes in dem Raum R der Schutzhülle 2 konusförmig um den Bolzen 81 verteilt und gegen den Bolzen 81 und den ersten Randbereich 1a gepresst, wobei eine dem Bolzen 81 und dem ersten Randbereich 1a abgewandte Deckfläche der konusförmig verteilten Dichtmasse 92a eine konkave Wölbung erhält.

Figur 10C zeigt eine Abwandlung der in der Figur 10B gezeigten Dichtungsanordnung, wobei im Unterschied zur Figur 10B das Dichtungselement 86 ein Scheibenelement 92b umfasst, welches sich ringförmig in einer senkrecht zur Erstreckungsrichtung E orientierten Erstreckungsebene erstreckt und den Bolzen 81 quer zur Erstreckungsrichtung E umläuft. Dabei ist das Scheibenelement 92b entlang der Erstreckungsrichtung E zwischen der Dichtmasse 92a und dem ersten Randbereich 1 a des Gassackes 1 angeordnet. Hierbei liegt das Scheibenelement 92b eng am Randbereich 1a des Gassackes 1 an und dient zum Ausgleichen von Unebenheiten des Gassackes (z.B. Nähte oder Falten).

Entsprechend der in der Figur 10D gezeigten Dichtungsanordnung kann zusätzlich entlang der Erstreckungsrichtung E zwischen dem scheibenförmigen Element 92b und dem ersten Randbereich 1a des Gassacks 1 eine weitere pastöse Dichtmasse 92c angeordnet sein, die einen Freiraum entlang der Erstreckungsrichtung E zwischen dem ersten Randbereich 1 a des Gassackes 1 und einer dem ersten Randbereich 1 a entlang der Erstreckungsrichtung E zugewandten Seite des scheibenförmigen Elementes 92b ausfüllt. Quer zur Erstreckungsrichtung E steht die Dichtmasse 92c dabei über einen äußersten Rand des Scheibenelementes 92b hinaus und verbindet die Schutzhülle 2 mit dem Gassack 1, was die Dichtungswirkung des solchermaßen aufgebauten Dichtungselementes 86 weiter verbessert.

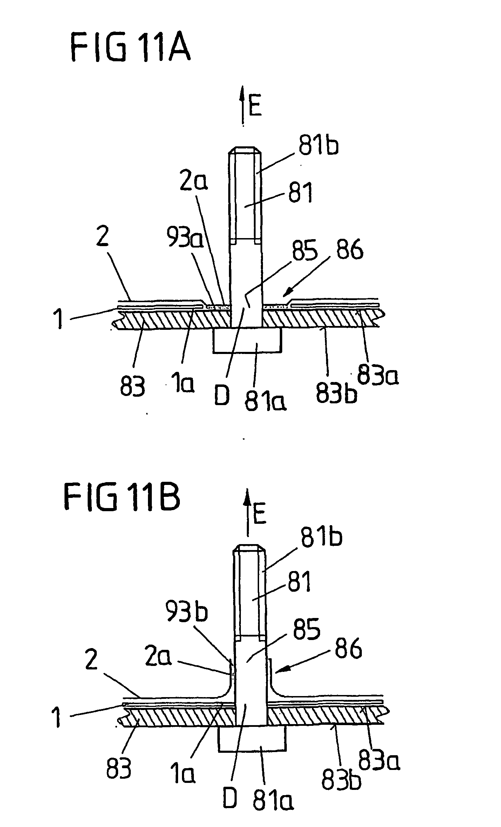

Figur 11A zeigt eine ausschnitthafte Schnittdarstellung einer weiteren Variante des Dichtungselementes 86, das im Unterschied zu den Figuren 6A bis 10D als eine an der Anlageseite 83a des Anlagebereiches 83 ausgebildete Beschichtung 93a ausgebildet ist. Die Beschichtung 93a umläuft dabei den Bolzen 81 quer zur Erstreckungsrichtung E flächig ringförmig. Der die Öffnung 85 der Schutzhülle 2 berandende zweite Randbereich 2a der Schutzhülle 2 liegt flächig an dieser Beschichtung 93a an und ist über diese Beschichtung derart mit der Anlageseite 83a des Anlagebereiches 83 verbunden, dass die Öffnung 85 der Schutzhülle 2 gasdicht abgedichtet ist, d.h., quer zur Erstreckungsrichtung E kann von der Öffnung 85 her keine Luft zwischen den zweiten Randbereich 2a der Schutzhülle 2 und den Anlagebereich 83 gelangen und in den Raum R der Schutzhülle 2 eindringen. Damit über die Beschichtung 93a eine gasdichte Verbindung zwischen dem zweiten Randbereich 2a und der Anlageseite 83a des Anlagebereiches 83 möglich ist, ist der Durchmesser der Durchgangsöffnung D des Gassackes 1 derart bemessen, dass der erste Randbereich 1 a des Gassackes 1 den mit der Beschichtung 93a beschichteten Bereich der Anlageseite 83a des Anlagebereiches 83 nicht überdeckt.

Die Beschichtung 93a ist vorzugsweise derart ausgebildet, dass sie erst nach einer Aktivierung eine gasdichte Verbindung mit dem zweiten Randbereich der Schutzhülle 2 eingeht. Hierzu kann die Beschichtung 93a beispielsweise thermisch aktivierbar ausgebildet sein, d.h., zur Herstellung einer gasdichten Verbindung zwischen der Beschichtung 93a und dem zweiten Randbereich 2a der Schutzhülle 2 muss die Beschichtung 93a erwärmt werden, wobei bevorzugt der Randbereich 2a auf der Beschichtung 93a aufliegt. Beim anschließenden Erkalten der Beschichtung 93a bildet sich eine gasdichte Verbindung zwischen dem zweiten Randbereich 2a und der Beschichtung 93a aus. Alternativ hierzu kann die Beschichtung 2a mechanisch aktivierbar ausgebildet sein, d.h., eine gasdichte Verbindung zwischen dem zweiten Randbereich 2a der Schutzhülle 2 und der Beschichtung 93a wird hergestellt, indem der Randbereich 2a mit einem einen vorbestimmbaren Schwellendruck übersteigenden Anpressdruck gegen die Beschichtung 93a gedrückt wird.

Alternativ zur Beschichtung 93a kann das Dichtelement 86 durch ein separat ausgebildetes thermoplastisches Element 93a gebildet sein, welches vor der Umhüllung des Gassackpaketes 10 mit der Schutzhülle 2 entgegen der Erstreckungsrichtung E über den Bolzen 81 geschoben wird, so dass das thermoplastische Element 93a den Bolzen 81 im Querschnitt, d.h. quer zur Erstreckungsrichtung E, eng umgreift. Hierbei kann das ringförmige thermoplastische Element 93a mit einer der Anlageseite 83a zugewandten Seite direkt oder alternativ unter Zwischenlage des ersten Randbereiches 1a an der Anlageseite 83a anliegen. Sodann wird das Gassackpaket 10 mit der Schutzhülle 2 umhüllt, so dass das thermoplastische Element 93a entlang der Erstreckungsrichtung E zwischen der Anlageseite 83a und dem zweiten Randbereich 2a der Schutzhülle 2 bzw. zwischen dem ersten Randbereich 1a des Gassackes 1 und dem zweiten Randbereich 2a angeordnet ist.

Zum gasdichten Verschließen der Öffnung 85 wird das thermoplastische Element 93a anschließend thermoplastisch verformt. Hierbei verschmilzt beispielsweise der zweite Randbereich 2a der Schutzhülle 2 gasdicht mit dem thermoplastischen Element 93a, welches seinerseits den Bolzen 81 derart umgreift, dass entgegen der Erstreckungsrichtung E (zwischen dem Bolzen 81 und dem thermoplastischen Element 93a hindurch) keine Luft in den Raum R eindringen kann.

Alternativ hierzu kann die Anlageseite 83a und / oder der erste Randbereich 1a des Gassackes 1 mit dem thermoplastischen Element 93a und das thermoplastische Element 93a mit dem zweiten Randbereich 2a der Schutzhülle 2 verschmolzen werden, so dass die Öffnung 85 der Schutzhülle 2 gasdicht verschlossen wird.

Zusätzlich kann das thermoplastische Element 93a natürlich auch mit dem Bolzen 81 verschmolzen werden, bzw. durch Schmelzen gasdicht an den Bolzen 81 angelegt werden.

Zum thermoplastischen Verformen des thermoplastischen Elementes 93a kann eine erhitzte Hülse verwendet werden (in der Figur 11A nicht gezeigt), die entgegen der Erstreckungsrichtung E über den Bolzen 81 geschoben und entgegen der Erstreckungsrichtung E gegen den zweiten Randbereich 2a sowie das (entlang der Erstreckungsrichtung E) darunter liegende thermoplastische Element 93 gedrückt wird. Hierdurch wird die Schutzhülle 2 mit dem thermoplastischen Element 93a verschmolzen, wodurch die Öffnung 85 gasdicht verschlossen wird.

Nach dem Abdichten der Öffnung 85 bzw. mehrerer solcher Öffnungen 85 kann in dem Raum R der Schutzhülle 2 ein Unterdruck bereitgestellt werden, der das Gassackpaket 10 auf ein kleines Packmaß zusammendrückt.

Figur 11B zeigt eine Abwandlung des in der Figur 11A gezeigten (aus einer Beschichtung 93a bestehenden) Dichtungselementes 86, wobei im Unterschied zur Figur 11A die Beschichtung 93b nicht am Anlagebereich 83 ausgebildet ist, sondern entlang der Erstreckungsrichtung E beabstandet zum Anlagebereich 83 am Bolzen 81. Dabei umläuft die Beschichtung 93b den Bolzen 81 im Querschnitt ringförmig.

Der zweite Randbereich 2a der Schutzhülle 2 liegt flächig an dieser Beschichtung 93b an und ist dabei mit dieser gasdicht verbunden, so dass entlang der Erstreckungsrichtung E zwischen dem Bolzen 81 und dem zweiten Randbereich 2a keine Luft durch die Öffnung 85 der Schutzhülle 2 in den von der Schutzhülle 2 umgebenden Raum R eindringen kann. Auch in diesem Fall kann die Beschichtung 93b thermisch bzw. mechanisch aktivierbar ausgebildet sein.

## Patentansprüche

1. Airbagmodul für ein Kraftfahrzeug, mit:
- einem zu einem Gassackpaket zusammengelegten Gassack,
- einer Komponente des Airbagmoduls, die über einen ersten Komponententeil zum Aufblasen des Gassackes mit Gas und / oder zum Befestigen des Gassackes an einem Kraftfahrzeugteil mit dem Gassack zusammenwirkt, und
- einer Schutzhülle, die den Gassack gasdicht umschließt,
**dadurch gekennzeichnet,**
**dass** die Schutzhülle (2, 7) auch den ersten Komponententeil (30; 82) umschließt und mindestens eine Öffnung (22; 22a; 22b; 72; 85) aufweist, durch die hindurch ein mit dem ersten Komponententeil verbundener zweiter Komponententeil (32; 32a, 32b; 81) aus dem von der Schutzhülle (2, 7) umschlossenen Raum (R) hinausragt, wobei die Öffnung (22; 22a; 22b; 72; 85) der Schutzhülle mittels eines Dichtelementes (4; 4a, 4b; 86) gasdicht verschlossen ist.

2. Airbagmodul nach Anspruch 1, **dadurch gekennzeichnet, dass** sich das Dichtelement (4; 4a, 4b; 86) ringartig entlang des Randes der Öffnung (22; 22a, 22b; 72; 85) der Schutzhülle (2, 7) erstreckt.

3. Airbagmodul nach Anspruch 2, **dadurch gekennzeichnet, dass** das Dichtelement (4; 4a, 4b, 86) als Dichtring ausgebildet ist.

4. Airbagmodul nach einem der vorhergehenden Ansprüche, **dadurch gekennzeichnet, dass** das Dichtelement (4; 4a, 4b; 86) ein- oder mehrteilig ausgebildet ist.

5. Airbagmodul nach einem der vorhergehenden Ansprüche, **dadurch gekennzeichnet, dass** das Dichtelement (4; 4a, 4b; 86) zumindest teilweise aus einem elastisch deformierbaren Material besteht.

6. Airbagmodul nach einem der vorhergehenden Ansprüche, **dadurch gekennzeichnet, dass** das Dichtelement (4; 4a, 4b; 86) zumindest teilweise aus einem thermoplastischen Material ausgebildet ist.

7. Airbagmodul nach einem der vorhergehenden Ansprüche, **dadurch gekennzeichnet, dass** das Dichtelement (4; 4a, 4b; 86) an einem Stützbereich des Airbagmoduls anliegt.

8. Airbagmodul nach Anspruch 7, **dadurch gekennzeichnet, dass** der Stützbereich des Airbagmoduls im Wesentlichen formstabil ist.

9. Airbagmodul nach einem der vorangegangenen Ansprüche, **dadurch gekennzeichnet, dass** die Komponente des Airbagmoduls als ein Gasgenerator (3) zum Aufblasen des Gassackes (1) ausgebildet ist.

10. Airbagmodul nach Anspruch 9, **dadurch gekennzeichnet, dass** der erste Komponententeil der als Gasgenerator (3) ausgebildeten Komponente als ein Generatorkörper (30) ausgebildet ist, der bei Zündung des Gasgenerators Gas zum Aufblasen des Gassackes (1) freisetzt.

11. Airbagmodul nach Anspruch 9 oder 10, **dadurch gekennzeichnet, dass** der zweite Komponententeil der als Gasgenerator (3) ausgebildeten Komponente als eine Zündeinrichtung (32; 32a, 32b) ausgebildet ist, die zum Zünden des Gasgenerators betätigbar ist.

12. Airbagmodul nach Anspruch 7 oder 8 und einem der Ansprüche 9 bis 11, **dadurch gekennzeichnet, dass** der Stützbereich am Gasgenerator (3) ausgebildet ist.

13. Airbagmodul nach Anspruch 10 und Anspruch 12, **dadurch gekennzeichnet, dass** der Stützbereich am Generatorkörper (30) ausgebildet ist.

14. Airbagmodul nach Anspruch 11 und Anspruch 12, **dadurch gekennzeichnet, dass** der Stützbereich an einem Zünder (33; 33a, 33b) der Zündeinrichtung (32; 32a, 32b) ausgebildet ist.

15. Airbagmodul nach Anspruch 7 und einem der Ansprüche 8 bis 14 soweit rückbezogen auf Anspruch 7, **dadurch gekennzeichnet, dass** das Dichtelement (4; 4a, 4b) elastisch gegen den Stützbereich vorgespannt ist.

16. Airbagmodul nach Anspruch 11 und einem der Ansprüche 12 bis 15 soweit rückbezogen auf Anspruch 11, **dadurch gekennzeichnet, dass** das Dichtelement (4; 4a, 4b) einen Teil (33; 33a, 33b) der Zündeinrichtung (32; 32a, 32b) umgreift.

17. Airbagmodul nach Anspruch 10 oder einem Ansprüche 11 bis 16 soweit rückbezogen auf Anspruch 10, **dadurch gekennzeichnet, dass** der Gassack (1) den Gasgenerator (3) umschließt, so dass der Generatorkörper (30) innerhalb des Gassackes (1) angeordnet ist.

18. Airbagmodul nach Anspruch 11 oder einem der Ansprüche 12 bis 17 soweit rückbezogen auf Anspruch 11, **dadurch gekennzeichnet, dass** die Zündeinrichtung (32; 32a, 32b) durch eine Öffnung (12; 12a, 12b) des Gassackes (1) hindurchragt.

19. Airbagmodul nach Anspruch 10 oder einem Ansprüche 11 bis 18 soweit rückbezogen auf Anspruch 10, **dadurch gekennzeichnet, dass** der Gasgenerator (3) als Rohrgasgenerator mit einem rohrförmigen Generatorkörper (30) ausgebildet ist.

20. Airbagmodul nach Anspruch 10 und nach Anspruch 11 oder einem der Ansprüche 12 bis 19 soweit rückbezogen auf Anspruch 11, **dadurch gekennzeichnet, dass** die Zündeinrichtung (32) in radialer Richtung (r) von dem Generatorkörper (30) absteht.

21. Airbagmodul nach Anspruch 10 und nach Anspruch 11 oder einem der Ansprüche 12 bis 20 soweit rückbezogen auf Anspruch 11, **dadurch gekennzeichnet, dass** die Zündeinrichtung (32a, 32b) in axialer Richtung (a) von mindestens einer Stirnseite des Generatorkörpers (30) absteht.

22. Airbagmodul nach einem der vorhergehenden Ansprüche, **dadurch gekennzeichnet, dass** die Schutzhülle (2, 7) zumindest teilweise als flexible Schutzhülle ausgebildet ist.

23. Airbagmodul nach Anspruch 22, **dadurch gekennzeichnet, dass** die Schutzhülle (2) vollständig als flexible Schutzhülle ausgebildet ist.

24. Airbagmodul nach Anspruch 22, **dadurch gekennzeichnet, dass** die Schutzhülle (7) teilweise durch eine gehäuseartige Hülle (70) und teilweise durch eine flexible Hülle (75) gebildet wird.

25. Airbagmodul nach Anspruch 24, **dadurch gekennzeichnet, dass** die flexible Hülle (75) eine Deckfläche der gehäuseartigen Hülle (70) verschließt.

26. Airbagmodul nach Anspruch 24 oder 25, **dadurch gekennzeichnet, dass** die gehäuseartige Hülle (70) elastisch deformierbar ausgebildet ist.

27. Airbagmodul nach einem der Ansprüche 22 bis 26, **dadurch gekennzeichnet, dass** die flexiblen Bestandteile der Schutzhülle (2, 7) als Schutzfolie ausgebildet sind.

28. Airbagmodul nach einem der Ansprüche 22 bis 27, **dadurch gekennzeichnet, dass** die Öffnung (22) in einem flexiblen Bestandteil der Schutzhülle (2) ausgebildet ist.

29. Airbagmodul nach Anspruch 7 oder einem der Ansprüche 8 bis 28, soweit rückbezogen auf Anspruch 7, **dadurch gekennzeichnet, dass** das Dichtelement (4) den Rand der Öffnung (22, 72) der Schutzhülle (2, 7) gegen den Stützbereich des Airbagmoduls drückt.

30. Airbagmodul nach Anspruch 10 und 23 und einem der Ansprüche 27 bis 29, **dadurch gekennzeichnet, dass** ein Modulgehäuse (5) vorgesehen ist, dass den Gassack (1), die Komponente (3) und die flexible Schutzhülle (2) zumindest teilweise umgibt.

31. Airbagmodul nach Anspruch 11 und 30, **dadurch gekennzeichnet, dass** die Zündeinrichtung (32) durch eine Öffnung (52) des Modulgehäuses (5) aus dem vom Modulgehäuse (5) umgebenen Raum hinausragt.

32. Airbagmodul nach Anspruch 30 oder 31, **dadurch gekennzeichnet, dass** das Dichtelement (4) am Modulgehäuse (5) angeordnet ist.

33. Airbagmodul nach Anspruch 11 und einem der Ansprüche 12 bis 32 soweit rückbezogen auf Anspruch 11, **dadurch gekennzeichnet, dass** die Zündeinrichtung (32; 32a, 32b) einen Zünder (33; 33a, 33b) und ein Zündkabel (34; 34a, 34b) zum Zünden des Zünders (33; 33a, 33b) umfasst.

34. Airbagmodul nach einem der Ansprüche 1 bis 6, **dadurch gekennzeichnet, dass** die mit dem Gassack (1) zusammenwirkende Komponente des Airbagmoduls als ein Befestigungsmittel (80) ausgebildet ist, welches zum Festlegen des Gassackes (1) an einem Träger des Airbagmoduls eingerichtet und vorgesehen ist.

35. Airbagmodul nach Anspruch 34, **dadurch gekennzeichnet, dass** die als Befestigungsmittel (80) ausgebildete Komponente über den ersten Komponententeil (82) mit dem Gassack (1) verbunden ist.

36. Airbagmodul nach Anspruch 34 oder 35, **dadurch gekennzeichnet, dass** der zweite Komponententeil (81) der als Befestigungsmittel (80) ausgebildeten Komponente zum Festlegen des Befestigungsmittels (80) an einem Träger des Airbagmoduls eingerichtet und vorgesehen ist.

37. Airbagmodul nach einem der Ansprüche 34 bis 36, **dadurch gekennzeichnet, dass** der erste Komponententeil (82) und der zweite Komponententeil (81) des Befestigungsmittels (80) einstückig miteinander verbunden sind.

38. Airbagmodul nach einem der Ansprüche 34 bis 37, **dadurch gekennzeichnet, dass** der zweite Komponententeil (81) des Befestigungsmittels (80) vom ersten Komponententeil (82) des Befestigungsmittels (80) abragt, insbesondere in Form zumindest eines Bolzens.

39. Airbagmodul nach einem der Ansprüche 34 bis 38, **dadurch gekennzeichnet, dass** das Dichtelement (86) den zweiten Komponententeil (81) des Befestigungsmittels (80) im Querschnitt umläuft.

40. Airbagmodul nach einem der Ansprüche 34 bis 39, **dadurch gekennzeichnet, dass** der zweite Komponententeil (81) des Befestigungsmittels (80) entlang einer Erstreckungsrichtung (E) längs erstreckt ist.

41. Airbagmodul nach einem der Ansprüche 34 bis 40, **dadurch gekennzeichnet, dass** der erste Komponententeil (82) des Befestigungsmittels. (80) in einem vom Gassack (1) umgebenen Innenraum (I) des Gassackes (1) angeordnet ist.

42. Airbagmodul nach einem der Ansprüche 34 bis 41, **dadurch gekennzeichnet, dass** der erste Komponententeil (82) des Befestigungsmittels (80) einen Anlagebereich (83) aufweist, der zur Anlage am Gassack (1) eingerichtet und vorgesehen ist.

43. Airbagmodul nach einem der Ansprüche 34 bis 42, **dadurch gekennzeichnet, dass** zumindest eine Durchgangsöffnung (D) des Gassackes (1) vorgesehen ist, und dass die mindestens eine Durchgangsöffnung (D) mit der Öffnung (85) der Schutzhülle (2) fluchtet.

44. Airbagmodul nach Anspruch 43, **gekennzeichnet durch** einen die Durchgangsöffnung (D) umrandenden ersten Randbereich (1a) des Gassackes (1).

45. Airbagmodul nach einem der Ansprüche 34 bis 44, **gekennzeichnet durch** einen die Öffnung (85) umrandenden zweiten Randbereich (2a) der Schutzhülle (2).

46. Airbagmodul nach Anspruch 40 und nach Anspruch 42 bis 45, **dadurch gekennzeichnet, dass** der zweite Komponententeil (81) des Befestigungsmittels (80) entlang der Erstreckungsrichtung (E) durch die Durchgangsöffnung (D) des Gassackes (1) geführt ist, so dass der erste Randbereich (1a) des Gassackes (1) entlang der Erstreckungsrichtung (E) zwischen dem Anlagebereich (83) und dem zweiten Randbereich (2a) der Schutzhülle (2) angeordnet ist.

47. Airbagmodul nach Anspruch 40 und 42 und einem der Ansprüche 45 oder 46, **dadurch gekennzeichnet, dass** das Dichtelement (86) zum Abdichten der Öffnung (85) den zweiten Randbereich (2a) der Schutzhülle (2) entlang der Erstreckungsrichtung (E) gegen den Anlagebereich (83) des ersten Komponententeiles (82) drückt.

48. Airbagmodul nach den Ansprüchen 40, 42 und 44 und einem der Ansprüche 45 bis 47, **dadurch gekennzeichnet, dass** das Dichtelement (86) zum Abdichten der Öffnung (85) der Schutzhülle (2) den zweiten Randbereich (2a) der Schutzhülle (2) zusammen mit dem ersten Randbereich (1a) des Gassackes (1) entlang der Erstreckungsrichtung (E) gegen den Anlagebereich (83) des ersten Komponententeils (82) drückt.

49. Airbagmodul nach einem der Ansprüche 34 bis 48, **dadurch gekennzeichnet, dass** das Dichtelement (86) einen den zweiten Komponententeil (81) des Befestigungsmittels (80) im Querschnitt umgebenden, insbesondere hohlzylinderförmigen Körper (91 a) aufweist.

50. Airbagmodul nach den Ansprüchen 40, 45 und 49, **dadurch gekennzeichnet**, das der Körper (91a) einen am zweiten Komponententeil 81) anliegenden und den zweiten Komponententeil (81) im Querschnitt umgebenden Mantel aufweist, von dem quer zur Erstreckungsrichtung (E) ein den Mantel umlaufender Flansch (F) absteht, mit einer dem zweiten Randbereich (2a) der Schutzhülle (2) zugewandten ersten Seite (F').

51. Airbagmodul nach Anspruch 50, **dadurch gekennzeichnet, dass** der Flansch (F) zum Abdichten der Öffnung (85) der Schutzhülle (2) mit seiner ersten Seite (F') entlang der Erstreckungsrichtung (E) gegen den zweiten Randbereich (2a) der Schutzhülle (2) drückt.

52. Airbagmodul nach Anspruch 40 und 45 und nach Anspruch 50, **dadurch gekennzeichnet, dass** das Dichtelement (86) zum Abdichten der Öffnung (85) ein entlang der Erstreckungsrichtung (E) zwischen der ersten Seite (F') und dem zweiten Randbereich (2a) der Schutzhülle (2) angeordnetes Anlageelement (91b) umfasst, das abdichtend am zweiten Randbereich (2a) der Schutzhülle (2) und der ersten Seite (F') anliegt.

53. Airbagmodul nach Anspruch 52, **dadurch gekennzeichnet, dass** das Anlageelement als ein flexibler Dichtungsring (91 b) ausgebildet ist, der den zweiten Komponententeil (81) des Befestigungsmittels (80) im Querschnitt umgreift.

54. Airbagmodul nach Anspruch 40 und nach Anspruch 45, **dadurch gekennzeichnet, dass** das Dichtelement (86) zum Abdichten der Öffnung (85) der Schutzhülle (2) den zweiten Randbereich (2a) der Schutzhülle (2) quer zur Erstreckungsrichtung (E) gegen den zweiten Komponententeil (81) des Befestigungsmittels (80) drückt.

55. Airbagmodul nach Anspruch 54, **dadurch gekennzeichnet, dass** das Dichtelement als ein flexibler Schlauch (90), ein Schrumpfschlauch oder als ein flexibler O-Ring (89) ausgebildet ist.

56. Airbagmodul nach Anspruch 40 und nach Anspruch 45 oder einem der Ansprüche 46 bis 53 soweit rückbezogen auf Anspruch 45, **dadurch gekennzeichnet, dass** das Dichtelement (86) zum gasdichten Abdichten der Öffnung (85) entlang der Erstreckungsrichtung (E) gegen den zweiten Randbereich (2a) der Schutzhülle (2) vorgespannt ist.

57. Airbagmodul nach Anspruch 40 oder einem der Ansprüche 41 bis 56 soweit rückbezogen auf Anspruch 40, **dadurch gekennzeichnet, dass** das Dichtelement (86) zum gasdichten Abdichten der Öffnung (85) quer zur Erstreckungsrichtung (E) gegen den zweiten Komponententeil (81) des Befestigungsmittels (80) vorgespannt ist.

58. Airbagmodul nach Anspruch 56 oder 57, **dadurch gekennzeichnet, dass** das Dichtmittel (86) zum Erzeugen der Vorspannung ein Federelement (88a) aufweist.

59. Airbagmodul nach Anspruch 45, **dadurch gekennzeichnet, dass** das Dichtelement (86) durch den die Öffnung (85) umrandenden zweiten Randbereich (2a) der Schutzhülle (2) gebildet ist, der dazu eingerichtet und vorgesehen ist, beim Erzeugen eines Unterdrucks im Raum (R) der Schutzhülle (2) gegen den zweiten Komponententeil (81) des Befestigungsmittels (80) gedrückt zu werden, so dass die Öffnung (85) der Schutzhülle (2) gasdicht abgedichtet wird.

60. Airbagmodul nach Anspruch 45, **dadurch gekennzeichnet, dass** das Dichtelement (86) als eine den zweiten Komponententeil (81) des Befestigungsmittels (80) im Querschnitt umlaufende Beschichtung (93b) des zweiten Komponententeils (81) ausgebildet ist, die zum gasdichten Verbinden des zweiten Randbereiches (2a) mit dem zweiten Komponententeil (81) eingerichtet und vorgesehen ist.

61. Airbagmodul nach Anspruch 42 und Anspruch 45, **dadurch gekennzeichnet, dass** das Dichtelement (86) als eine den zweiten Komponententeil (81) im Querschnitt umlaufende Beschichtung (93a) des Anlagebereiches (83) ausgebildet ist, mit der der die Öffnung (85) der Schutzhülle (2) umrandenden zweite Randbereich (2a) derart verbunden ist, dass die Öffnung (85) der Schutzhülle (2) gasdicht abgedichtet ist.

62. Airbagmodul nach Anspruch 60 oder 61, **dadurch gekennzeichnet, dass** die Beschichtung (93a; 93b) dazu vorgesehen und eingerichtet ist, sich durch Erwärmen mit dem zweiten Randbereich (2a) der Schutzhülle (2) gasdicht zu verbinden.

63. Airbagmodul nach Anspruch 60 oder 61, **dadurch gekennzeichnet, dass** die Beschichtung (93a; 93b) mechanisch aktivierbar ist derart, dass die Beschichtung insbesondere durch Drücken des zweiten Randbereiches (2a) der Schutzhülle (2) gegen die Beschichtung mit dem zweiten Randbereich (2a) der Schutzhülle (2) gasdicht verbindbar ist.

64. Airbagmodul nach einem der Ansprüche 34 bis 59, **dadurch gekennzeichnet, dass** das Dichtmittel (86) eine zusätzliche, verformbare Dichtmasse (88b; 88c; 92a; 92c) umfasst.

65. Airbagmodul nach Anspruch 45 und 64, **dadurch gekennzeichnet, dass** die Dichtmasse (88b) zwischen dem Dichtelement (88a) und dem zweiten Randbereich (2a) der Schutzhülle (2) angeordnet ist.

66. Airbagmodul nach Anspruch 44 und 45 und nach Anspruch 64 oder 65, **dadurch gekennzeichnet, dass** die Dichtmasse (88c; 92a; 92c) zumindest teilweise zwischen dem zweiten Randbereich (2a) der Schutzhülle (2) und dem ersten Randbereich (1a) des Gassackes (1) angeordnet ist.

67. Airbagmodul nach Anspruch 64 oder einem der Ansprüche 65 oder 66 soweit rückbezogen auf Anspruch 64, **dadurch gekennzeichnet, dass** die Dichtmasse (88b; 88c; 92a; 92c) am zweiten Komponententeil (81) des Befestigungsmittels anliegt.

68. Airbagmodul nach einem der Ansprüche 34 bis 67, **dadurch gekennzeichnet, dass** das Dichtelement (86) ein Scheibenelement (92b) zum Ausgleichen von Unebenheiten des Gassackes (1) umfasst.

69. Airbagmodul nach Anspruch 68, **dadurch gekennzeichnet, dass** das Scheibenelement (92b) den zweiten Komponententeil (81) des Befestigungsmittels (80) im Querschnitt ringförmig umläuft.

70. Airbagmodul nach Anspruch 40, 44 und 45 und nach Anspruch 68 oder 69, **dadurch gekennzeichnet, dass** das Scheibenelement (92b) entlang der Erstreckungsrichtung (E) zwischen dem zweiten Randbereich (2a) der Schutzhülle (2) und dem ersten Randbereich (1a) des Gassackes (1) angeordnet ist.

71. Airbagmodul nach Anspruch 40 und 45 und nach einem der Ansprüche 64 bis 67 und nach einem der Ansprüche 68 bis 70, **dadurch gekennzeichnet, dass** die Dichtmasse (92a) zumindest teilweise entlang der Erstreckungsrichtung (E) zwischen dem Scheibenelement (92b) und dem zweiten Randbereich (2a) der Schutzhülle (2) angeordnet ist.

72. Airbagmodul nach Anspruch 40 und 44 und nach einem der Ansprüche 64 bis 67 und nach einem der Ansprüche 68 bis 71, **dadurch gekennzeichnet, dass** die Dichtmasse (92c) zumindest teilweise entlang der Erstreckungsrichtung (E) zwischen dem Scheibenelement (92b) und dem ersten Randbereich (1 a) des Gassackes (1) angeordnet ist.

73. Airbagmodul nach Anspruch 42 oder einem der Ansprüche 43 bis 72 soweit rückbezogen auf Anspruch 42, **dadurch gekennzeichnet, dass** der Anlagebereich (83) als ein flächiger Ring ausgebildet ist.

74. Airbagmodul nach Anspruch 40 und nach Anspruch 42 oder einem der Ansprüche 43 bis 73 soweit rückbezogen auf Anspruch 42, **dadurch gekennzeichnet, dass** der Anlagebereich (83) an einem eine Einströmöffnung (O) des Gassackes (1) berandenden dritten Randbereich (O') des Gassackes (1) anliegt, so dass der dritte Randbereich (O') des Gassackes (1) entlang der Erstreckungsrichtung (E) zwischen dem Anlagebereich und der Schutzhülle angeordnet ist.

75. Airbagmodul nach Anspruch 43 und 74, **dadurch gekennzeichnet, dass** die Durchgangsöffnung (D) am dritten Randbereich (O') ausgebildet ist.

76. Airbagmodul nach Anspruch 42 oder einem der Ansprüche 43 bis 75 soweit rückbezogen auf Anspruch 42, **dadurch gekennzeichnet, dass** der erste Komponententeil (82) des Befestigungsmittels einen Diffusor (84) umfasst, der vom Anlagebereich (83) in den Innenraum (I) des Gassacks (1) absteht.

77. Airbagmodul nach den Ansprüchen 38, 40, 42 und nach Anspruch 43 oder einem der Ansprüche 44 bis 76 soweit rückbezogen auf Anspruch 43, **dadurch gekennzeichnet, dass** der zweite Komponententeil des Befestigungsmittels (80) durch eine Mehrzahl von entlang der Erstreckungsrichtung (E) vom Anlagebereich (81) abstehender Bolzen (81) gebildet ist, die durch eine entsprechende Mehrzahl an Durchgangsöffnungen (D) des Gassackes (1) und mit den Durchgangsöffnungen (D) fluchtenden Öffnungen (85) der Schutzhülle (2) geführt sind und aus dem durch die Schutzhülle (2) umgebenen Raum (R) hinausragen, und dass die Öffnungen (85) durch eine entsprechende Mehrzahl an Dichtelementen (86) gasdicht verschlossen sind.

78. Airbagmodul nach Anspruch 38 oder 77, **dadurch gekennzeichnet, dass** der mindestens eine Bolzen (81) zum Festlegen des Gassackpakets (10) an einem Träger des Gassackpakets ein Außengewinde (81 a) aufweist.

## Claims

1. An airbag module for a motor vehicle, comprising
- an airbag folded up to form an airbag package,
- a component of the airbag module, which via a first component part for inflating the airbag with gas and/or for fastening the airbag to a motor vehicle part cooperates with the airbag, and
- a protective covering which encloses the airbag in a gastight manner,
**characterized in that**
the protective covering (2, 7) also encloses the first component part (30; 82) and comprises at least one opening (22; 22a; 22b; 72; 85), through which a second component part (32; 32a; 32b; 81) connected to the first component part projects from the space (R) enclosed by the protective covering (2, 7), the opening (22; 22a; 22b; 72; 85) of the protective covering being closed in a gastight manner by means of a sealing element (4; 4a; 4b; 86).

2. The airbag module as claimed in claim 1, **characterized in that** the sealing element (4; 4a; 4b; 86) extends in an annular manner along the edge of the opening (22; 22a; 22b; 72; 85) of the protective covering (2, 7).

3. The airbag module as claimed in claim 2, **characterized in that** the sealing element (4; 4a; 4b; 86) is configured as a sealing ring.

4. The airbag module as claimed in one of the preceding claims, **characterized in that** the sealing element (4; 4a; 4b; 86) is configured in one piece or in a plurality of pieces.

5. The airbag module as claimed in one of the preceding claims, **characterized in that** the sealing element (4; 4a; 4b; 86) consists at least partially of an elastically deformable material.

6. The airbag module as claimed in one of the preceding claims, **characterized in that** the sealing element (4; 4a; 4b; 86) is configured at least partially of a thermoplastic material.

7. The airbag module as claimed in one of the preceding claims, **characterized in that** the sealing element (4; 4a; 4b; 86) bears against a support region of the airbag module.

8. The airbag module as claimed in claim 7, **characterized in that** the support region of the airbag module is substantially dimensionally stable.

9. The airbag module as claimed in one of the preceding claims, **characterized in that** the component of the airbag module is configured as a gas generator (3) for inflating the airbag (1).

10. The airbag module as claimed in claim 9, **characterized in that** the first component part of the component configured as a gas generator (3) is configured as a generator body (30) which, upon ignition of the gas generator, releases gas for inflating the airbag (1).

11. The airbag module as claimed in claim 9 or 10, **characterized in that** the second component part of the component configured as a gas generator (3) is configured as an ignition device (32; 32a; 32b) which is adapted to be actuated for igniting the gas generator.

12. The airbag module as claimed in claim 7 or 8 and one of claims 9 to 11, **characterized in that** the support region is configured on the gas generator (3).

13. The airbag module as claimed in claim 10 and claim 12, **characterized in that** the support region is configured on the generator body (30).

14. The airbag module as claimed in claim 11 and claim 12, **characterized in that** the support region is configured on an igniter (33; 33a; 33b) of the ignition device (32; 32a; 32b).

15. The airbag module as claimed in claim 7 and one of claims 8 to 14, referring back to claim 7, **characterized in that** the sealing element (4; 4a; 4b) is elastically pretensioned against the support region.

16. The airbag module as claimed in claim 11 and one of claims 12 to 15, referring back to claim 11, **characterized in that** the sealing element (4; 4a; 4b) engages around a part (33; 33a; 33b) of the ignition device (32; 32a; 32b).

17. The airbag module as claimed in claim 10 or one of claims 11 to 16, referring back to claim 10, **characterized in that** the airbag (1) encloses the gas generator (3) so that the generator body (30) is arranged inside the airbag (1).

18. The airbag module as claimed in claim 11 or one of claims 12 to 17, referring back to claim 11, **characterized in that** the ignition device (32; 32a; 32b) projects through an opening (12; 12a; 12b) of the airbag (1).

19. The airbag module as claimed in claim 10 or one of claims 11 to 18, referring back to claim 10, **characterized in that** the gas generator (3) is configured as a tubular gas generator with a tubular generator body (30).

20. The airbag module as claimed in claim 10 and as claimed in claim 11 or one of claims 12 to 19, referring back to claim 11, **characterized in that** the ignition device (32) projects in the radial direction (r) away from the generator body (30).

21. The airbag module as claimed in claim 10 and as claimed in claim 11 or one of claims 12 to 20, referring back to claim 11, **characterized in that** the ignition device (32a; 32b) projects in the axial direction (a) away from at least one front face of the generator body (30).

22. The airbag module as claimed in one of the preceding claims, **characterized in that** the protective covering (2, 7) is configured at least partially as a flexible protective covering.

23. The airbag module as claimed in claim 22, **characterized in that** the protective covering (2) is configured entirely as a flexible protective covering.

24. The airbag module as claimed in claim 22, **characterized in that** the protective covering (7) is partially formed by a housing-like covering (70) and partially by a flexible covering (75).

25. The airbag module as claimed in claim 24, **characterized in that** the flexible covering (75) closes a top surface of the housing-like covering (70).

26. The airbag module as claimed in claim 24 or 25, **characterized in that** the housing-like covering (70) is configured to be elastically deformable.

27. The airbag module as claimed in one of claims 22 to 26, **characterized in that** the flexible components of the protective covering (2, 7) are configured as protective films.

28. The airbag module as claimed in one of claims 22 to 27, **characterized in that** the opening (22) is configured in a flexible component of the protective covering (2).

29. The airbag module as claimed in claim 7 or one of claims 8 to 28, referring back to claim 7, **characterized in that** the sealing element (4) presses the edge of the opening (22, 72) of the protective covering (2, 7) against the support region of the airbag module.

30. The airbag module as claimed in claim 10 and 23 and one of claims 27 to 29, **characterized in that** a module housing (5) is provided which at least partially surrounds the airbag (1), the component (3) and the flexible protective covering (2).

31. The airbag module as claimed in claim 11 and 30, **characterized in that** the ignition device (32) projects through an opening (52) of the module housing (5) out of the space surrounded by the module housing (5).

32. The airbag module as claimed in claim 30 or 31, **characterized in that** the sealing element (4) is arranged on the module housing (5).

33. The airbag module as claimed in claim 11 and one of claims 12 to 32, referring back to claim 11, **characterized in that** the ignition device (32; 32a; 32b) comprises an igniter (33; 33a; 33b) and an ignition cable (34; 34a; 34b) for igniting the igniter (33; 33a; 33b).

34. The airbag module as claimed in one of claims 1 to 6, **characterized in that** the component of the airbag module cooperating with the airbag (1) is configured as a fastening means (80) which is designed and provided to secure the airbag (1) to a support of the airbag module.

35. The airbag module as claimed in claim 34, **characterized in that** the component configured as a fastening means (80) is connected via the first component part (82) to the airbag (1).

36. The airbag module as claimed in claim 34 or 35, **characterized in that** the second component part (81) of the component configured as a fastening means (80) is designed and provided to secure the fastening means (80) to a support of the airbag module.

37. The airbag module as claimed in one of claims 34 to 36, **characterized in that** the first component part (82) and the second component part (81) of the fastening means (80) are connected integrally to one another.

38. The airbag module as claimed in one of claims 34 to 37, **characterized in that** the second component part (81) of the fastening means (80) projects from the first component part (82) of the fastening means (80), in particular in the form of at least one pin.

39. The airbag module as claimed in one of claims 34 to 38, **characterized in that** the sealing element (86) surrounds the second component part (81) of the fastening means (80) in cross section.

40. The airbag module as claimed in one of claims 34 to 39, **characterized in that** the second component part (81) of the fastening means (80) is extended longitudinally in a direction of extension (E).

41. The airbag module as claimed in one of claims 34 to 40, **characterized in that** the first component part (82) of the fastening means (80) is arranged in an interior (I) of the airbag (1) surrounded by the airbag (1).

42. The airbag module as claimed in one of claims 34 to 41, **characterized in that** the first component part (82) of the fastening means (80) comprises a bearing region (83) which is designed and provided to bear against the airbag (1).

43. The airbag module as claimed in one of claims 34 to 42, **characterized in that** at least one through-opening (D) of the airbag (1) is provided and **in that** the at least one through-opening (D) is aligned with the opening (85) of the protective covering (2).

44. The airbag module as claimed in claim 43, **characterized by** a first edge region (1a) of the airbag (1) surrounding the through-opening (D).

45. The airbag module as claimed in one of claims 34 to 44, **characterized by** a second edge region (2a) of the protective covering (2) surrounding the opening (85).

46. The airbag module as claimed in claim 40 and as claimed in claims 42 to 45, **characterized in that** the second component part (81) of the fastening means (80) is passed in the direction of extension (E) through the through-opening (D) of the airbag (1) so that the first edge region (1a) of the airbag (1) is arranged in the direction of extension (E) between the bearing region (83) and the second edge region (2a) of the protective covering (2).

47. The airbag module as claimed in claim 40 and 42 and one of claims 45 or 46, **characterized in that** the sealing element (86) for sealing the opening (85) presses the second edge region (2a) of the protective covering (2) in the direction of extension (E) against the bearing region (83) of the first component part (82).

48. The airbag module as claimed in claims 40, 42 and 44 and one of claims 45 to 47, **characterized in that** the sealing element (86) for sealing the opening (85) of the protective covering (2) presses the second edge region (2a) of the protective covering (2) together with the first edge region (1a) of the airbag (1) in the direction of extension (E) against the bearing region (83) of the first component part (82).

49. The airbag module as claimed in one of claims 34 to 48, **characterized in that** the sealing element (86) has, in particular, a hollow cylindrical body (91a) surrounding the second component part (81) of the fastening means (80) in cross section.

50. The airbag module as claimed in claims 40, 45 and 49, **characterized in that** the body (91a) comprises a casing bearing against the second component part (81) and surrounding the second component part (81) in cross section, from which a flange (F) surrounding the casing projects transversely to the direction of extension (E), with a first face (F') facing the second edge region (2a) of the protective covering (2).

51. The airbag module as claimed in claim 50, **characterized in that** the flange (F) for sealing the opening (85) presses the protective covering (2) with its first face (F') in the direction of extension (E) against the second edge region (2a) of the protective covering (2).

52. The airbag module as claimed in claim 40 and 45 and as claimed in claim 50, **characterized in that**, for sealing the opening (85), the sealing element (86) comprises a bearing element (91b) arranged in the direction of extension (E) between the first face (F') and the second edge region (2a) of the protective covering (2), which sealingly bears against the second edge region (2a) of the protective covering (2) and the first face (F').

53. The airbag module as claimed in claim 52, **characterized in that** the bearing element is configured as a flexible sealing ring (91b) which engages around the second component part (81) of the fastening means (80) in cross section.

54. The airbag module as claimed in claim 40 and as claimed in claim 45, **characterized in that** the sealing element (86) for sealing the opening (85) of the protective covering (2) presses the second edge region (2a) of the protective covering (2) transversely to the direction of extension (E) against the second component part (81) of the fastening means (80).

55. The airbag module as claimed in claim 54, **characterized in that** the sealing element is configured as a flexible tube (90), a heat-shrinkable tube, or as a flexible O-ring (89).

56. The airbag module as claimed in claim 40 and as claimed in claim 45 or one of claims 46 to 53, referring back to claim 45, **characterized in that** the sealing element (86) for sealing the opening (85) in a gastight manner is pretensioned in the direction of extension (E) against the second edge region (2a) of the protective covering (2).

57. The airbag module as claimed in claim 40 or one of claims 41 to 56, referring back to claim 40, **characterized in that** the sealing element (86) for sealing the opening (85) in a gastight manner is pretensioned transversely to the direction of extension (E) against the second component part (81) of the fastening means (80).

58. The airbag module as claimed in claim 56 or 57, **characterized in that** the sealing means (86) for generating the pretensioning comprises a spring element (88a).

59. The airbag module as claimed in claim 45, **characterized in that** the sealing element (86) is formed by the second edge region (2a) of the protective covering (2) surrounding the opening (85), which is designed and provided to be pressed against the second component part (81) of the fastening means (80) when generating a vacuum in the space (R) of the protective covering (2), so that the opening (85) of the protective covering (2) is sealed in a gastight manner.

60. The airbag module as claimed in claim 45, **characterized in that** the sealing element (86) is configured as a coating (93b) of the second component part (81) surrounding the second component part (81) of the fastening means (80) in cross section, which is designed and provided for connecting the second edge region (2a) to the second component part (81) in a gastight manner.

61. The airbag module as claimed in claim 42 and claim 45, **characterized in that** the sealing element (86) is configured as a coating (93a) of the bearing region (83) surrounding the second component part (81) in cross section, to which the second edge region (2a) surrounding the opening (85) of the protective covering (2) is connected such that the opening (85) of the protective covering (2) is sealed in a gastight manner.

62. The airbag module as claimed in claim 60 or 61, **characterized in that** the coating (93a; 93b) is provided and designed to be connected in a gastight manner to the second edge region (2a) of the protective covering (2) by heating.

63. The airbag module as claimed in claim 60 or 61, **characterized in that** the coating (93a; 93b) may be activated mechanically, such that the coating, in particular by pressing the second edge region (2a) of the protective covering (2) against the coating, may be connected in a gastight manner to the second edge region (2a) of the protective covering (2).

64. The airbag module as claimed in one of claims 34 to 59, **characterized in that** the sealing means (86) comprises an additional, deformable sealing mass (88b; 88c; 92a; 92c).

65. The airbag module as claimed in claim 45 and 64, **characterized in that** the sealing mass (88b) is arranged between the sealing element (88a) and the second edge region (2a) of the protective covering (2).

66. The airbag module as claimed in claim 44 and 45 and as claimed in claim 64 or 65, **characterized in that** the sealing mass (88c; 92a; 92c) is at least partially arranged between the second edge region (2a) of the protective covering (2) and the first edge region (1a) of the airbag (1).

67. The airbag module as claimed in claim 64 or one of claims 65 or 66, referring back to claim 64, **characterized in that** the sealing mass (88b; 88c; 92a; 92c) bears against the second component part (81) of the fastening means.

68. The airbag module as claimed in one of claims 34 to 67, **characterized in that** the sealing element (86) comprises a disk element (92b) for compensating for unevenness of the airbag (1).

69. The airbag module as claimed in claim 68, **characterized in that** the disk element (92b) surrounds the second component part (81) of the fastening means (80) in cross section in an annular manner.

70. The airbag module as claimed in claim 40, 44 and 45, and as claimed in claim 68 or 69, **characterized in that** the disk element (92b) is arranged in the direction of extension (E) between the second edge region (2a) of the protective covering (2) and the first edge region (1a) of the airbag (1).

71. The airbag module as claimed in claim 40 and 45 and as claimed in one of claims 64 to 67 and as claimed in one of claims 68 to 70, **characterized in that** the sealing mass (92a) is arranged at least partially in the direction of extension (E) between the disk element (92b) and the second edge region (2a) of the protective covering (2).

72. The airbag module as claimed in claim 40 and 44 and as claimed in one of claims 64 to 67 and as claimed in one of claims 68 to 71, **characterized in that** the sealing mass (92c) is arranged at least partially in the direction of extension (E) between the disk element (92b) and the first edge region (1a) of the airbag (1).

73. The airbag module as claimed in claim 42 or one of claims 43 to 72, referring back to claim 42, **characterized in that** the bearing region (83) is configured as a flat ring.

74. The airbag module as claimed in claim 40 and as claimed in claim 42 or one of claims 43 to 73, referring back to claim 42, **characterized in that** the bearing region (83) bears against a third edge region (O') of the airbag (1) bordering an inlet opening (O) of the airbag (1), so that the third edge region (O') of the airbag (1) is arranged in the direction of extension (E) between the bearing region and the protective covering.

75. The airbag module as claimed in claim 43 and 74, **characterized in that** the through-opening (D) is configured on the third edge region (O').

76. The airbag module as claimed in claim 42 or one of claims 43 to 75, referring back to claim 42, **characterized in that** the first component part (82) of the fastening means comprises a diffuser (84) which projects from the bearing region (83) into the interior (I) of the airbag (1).

77. The airbag module as claimed in claims 38, 40, 42 and as claimed in claim 43 or one of claims 44 to 76, referring back to claim 43, **characterized in that** the second component part of the fastening means (80) is formed by a plurality of pins (81) projecting in the direction of extension (E) from the bearing region (81), which are passed through a corresponding plurality of through-openings (D) of the airbag (1) and openings (85) of the protective covering (2) aligned with the through-openings (D) and project from the space (R) surrounded by the protective covering (2) and **in that** the openings (85) are closed in a gastight manner by a corresponding plurality of sealing elements (86).

78. The airbag module as claimed in claim 38 or 77, **characterized in that** the at least one pin (81), for securing the airbag package (10) to a support of the airbag package, comprises an external thread (81a).

## Revendications

1. Module de sac gonflable destiné à un véhicule automobile comprenant :
- un sac de gaz plié en un paquet de sac de gaz,
- un composant du module de sac gonflable qui coopère avec le sac de gaz par une première partie de composant pour le gonflage du sac de gaz et/ou pour la fixation du sac de gaz sur une partie du véhicule automobile, et
- une enveloppe protectrice qui entoure le sac de gaz de manière étanche au gaz,
**caractérisé en ce que**
l'enveloppe protectrice (2, 7) entoure aussi la première partie de composant (30 ; 82) et présente au moins une ouverture (22 ; 22a ; 22b ; 72 ; 85), par laquelle une seconde partie de composant (32 ; 32a; 32b ; 81) reliée à la première partie de composant dépasse de l'espace (R) entouré par l'enveloppe protectrice (2, 7), sachant que l'ouverture (22 ; 22a ; 22b ; 72 ; 85) de l'enveloppe protectrice est fermée de manière étanche au gaz à l'aide d'un élément étanche (4 ; 4a, 4b ; 86).

2. Module de sac gonflable selon la revendication 1, **caractérisé en ce que** l'élément étanche (4 ; 4a, 4b ; 86) s'étend comme un anneau le long du bord de l'ouverture (22 ; 22a, 22b ; 72 ; 85) de l'enveloppe protectrice (2, 7).

3. Module de sac gonflable selon la revendication 2, **caractérisé en ce que** l'élément étanche (4 ; 4a, 4b, 86) est réalisé comme une bague d'étanchéité.

4. Module de sac gonflable selon l'une quelconque des revendications précédentes, **caractérisé en ce que** l'élément étanche (4 ; 4a, 4b ; 86) est réalisé en une ou plusieurs parties.

5. Module de sac gonflable selon l'une quelconque des revendications précédentes, **caractérisé en ce que** l'élément étanche (4 ; 4a, 4b ; 86) se compose au moins en partie d'un matériau élastiquement déformable.

6. Module de sac gonflable selon l'une quelconque des revendications précédentes, **caractérisé en ce que** l'élément étanche (4 ; 4a, 4b ; 86) est réalisé au moins en partie en un matériau thermoplastique.

7. Module de sac gonflable selon l'une quelconque des revendications précédentes, **caractérisé en ce que** l'élément étanche (4 ; 4a, 4b ; 86) repose sur une zone d'appui du module de sac gonflable.

8. Module de sac gonflable selon la revendication 7, **caractérisé en ce que** la zone d'appui du module de sac gonflable est sensiblement indéformable.

9. Module de sac gonflable selon l'une quelconque des revendications précédentes, **caractérisé en ce que** le composant du module de sac gonflable est réalisé comme un générateur de gaz (3) pour le gonflage du sac de gaz (1).

10. Module de sac gonflable selon la revendication 9, **caractérisé en ce que** la première partie du composant réalisé comme générateur de gaz (3) est réalisée comme un corps de générateur (30) qui libère, lors de l'activation du générateur de gaz, du gaz pour le gonflage du sac de gaz (1).

11. Module de sac gonflable selon la revendication 9 ou 10, **caractérisé en ce que** la seconde partie du composant réalisé comme un générateur de gaz (3) est réalisée comme un dispositif de mise à feu (32 ; 32a, 32b) qui peut être actionné pour l'activation du générateur de gaz.

12. Module de sac gonflable selon la revendication 7 ou 8 et l'une quelconque des revendications 9 à 11, **caractérisé en ce que** la zone d'appui est réalisée sur le générateur de gaz (3).

13. Module de sac gonflable selon les revendications 10 et 12, **caractérisé en ce que** la zone d'appui est réalisée sur le corps de générateur (30).

14. Module de sac gonflable selon les revendications 11 et 12, **caractérisé en ce que** la zone d'appui est réalisée sur un allumeur (33 ; 33a, 33b) du dispositif de mise à feu (32 ; 32a, 32b).

15. Module de sac gonflable selon la revendication 7 et l'une quelconque des revendications 8 à 14, dans la mesure où il est fait référence à la revendication 7, **caractérisé en ce que** l'élément étanche (4 ; 4a, 4b) est précontraint élastiquement contre la zone d'appui.

16. Module de sac gonflable selon la revendication 11 et l'une quelconque des revendications 12 à 15, dans la mesure où il est fait référence à la revendication 11, **caractérisé en ce que** l'élément étanche (4 ; 4a, 4b) entoure une partie (33 ; 33a, 33b) du dispositif de mise à feu (32 ; 32a, 32b).

17. Module de sac gonflable selon la revendication 10 ou l'une quelconque des revendications 11 à 16, dans la mesure où il est fait référence à la revendication 10, **caractérisé en ce que** le sac de gaz (1) entoure le générateur de gaz (3) de sorte que le corps de générateur (30) soit disposé dans le sac de gaz (1).

18. Module de sac gonflable selon la revendication 11 ou l'une quelconque des revendications 12 à 17, dans la mesure où il est fait référence à la revendication 11, **caractérisé en ce que** le dispositif de mise à feu (32 ; 32a, 32b) traverse une ouverture (12; 12a, 12b) du sac de gaz (1).

19. Module de sac gonflable selon la revendication 10 ou l'une quelconque des revendications 11 à 18, dans la mesure où il est fait référence à la revendication 10, **caractérisé en ce que** le générateur de gaz (3) est réalisé comme un générateur de gaz à tubes avec un corps de générateur (30) tubulaire.

20. Module de sac gonflable selon les revendications 10 et 11 ou l'une quelconque des revendications 12 à 19, dans la mesure où il est fait référence à la revendication 11, **caractérisé en ce que** le dispositif de mise à feu (32) est éloigné dans le sens radial (r) du corps de générateur (30).

21. Module de sac gonflable selon les revendications 10 et 11 ou l'une quelconque des revendications 12 à 20, dans la mesure où il est fait référence à la revendication 11, **caractérisé en ce que** le dispositif de mise à feu (32a, 32b) est éloigné dans le sens axial (a) d'au moins un côté avant du corps de générateur (30).

22. Module de sac gonflable selon l'une quelconque des revendications précédentes, **caractérisé en ce que** l'enveloppe protectrice (2, 7) est réalisée au moins en partie comme une enveloppe protectrice flexible.

23. Module de sac gonflable selon la revendication 22, **caractérisé en ce que** l'enveloppe protectrice (2) est complètement réalisée comme une enveloppe protectrice flexible.

24. Module de sac gonflable selon la revendication 22, **caractérisé en ce que** l'enveloppe protectrice (7) est formée en partie par une enveloppe de type boîtier (70) et en partie par une enveloppe flexible (75).

25. Module de sac gonflable selon la revendication 24, **caractérisé en ce que** l'enveloppe flexible (75) ferme une surface de recouvrement de l'enveloppe de type boîtier (70).

26. Module de sac gonflable selon la revendication 24 ou 25, **caractérisé en ce que** l'enveloppe de type boîtier (70) est réalisée de manière élastiquement déformable.

27. Module de sac gonflable selon l'une quelconque des revendications 22 à 26, **caractérisé en ce que** les constituants flexibles de l'enveloppe protectrice (2, 7) sont réalisés comme une feuille protectrice.

28. Module de sac gonflable selon l'une quelconque des revendications 22 à 27, **caractérisé en ce que** l'ouverture (22) est réalisée dans un constituant flexible de l'enveloppe protectrice (2).

29. Module de sac gonflable selon la revendication 7 ou l'une quelconque des revendications 8 à 28, dans la mesure où il est fait référence à la revendication 7, **caractérisé en ce que** l'élément étanche (4) presse le bord de l'ouverture (22, 72) de l'enveloppe protectrice (2, 7) contre la zone d'appui du module de sac gonflable.

30. Module de sac gonflable selon les revendications 10 et 23 et l'une quelconque des revendications 27 à 29, **caractérisé en ce qu'**un boîtier de module (5) est prévu, lequel entoure au moins en partie le sac de gaz (1), le composant (3) et l'enveloppe protectrice flexible (2).

31. Module de sac gonflable selon les revendications 11 et 30, **caractérisé en ce que** le dispositif de mise à feu (32) dépasse, par une ouverture (52) du boîtier de module (5), de l'espace entouré par le boîtier de module (5).

32. Module de sac gonflable selon la revendication 30 ou 31, **caractérisé en ce que** l'élément étanche (4) est disposé sur le boîtier de module (5).

33. Module de sac gonflable selon la revendication 11 et l'une quelconque des revendications 12 à 32, dans la mesure où il est fait référence à la revendication 11, **caractérisé en ce que** le dispositif de mise à feu (32 ; 32a, 32b) comporte un allumeur (33 ; 33a, 33b) et un câble d'activation (34 ; 34a, 34b) pour l'activation de l'allumeur (33 ; 33a, 33b).

34. Module de sac gonflable selon l'une quelconque des revendications 1 à 6, **caractérisé en ce que** le composant coopérant avec le sac de gaz (1) du module de sac gonflable est réalisé comme un moyen de fixation (80) qui est aménagé et prévu pour la fixation du sac de gaz (1) sur un support du module de sac gonflable.

35. Module de sac gonflable selon la revendication 34, **caractérisé en ce que** le composant réalisé comme moyen de fixation (80) est relié par la première partie de composant (82) au sac de gaz (1).

36. Module de sac gonflable selon la revendication 34 ou 35, **caractérisé en ce que** la seconde partie (81) du composant réalisé comme moyen de fixation (80) est aménagée et prévue pour la fixation du moyen de fixation (80) sur un support du module de sac gonflable.

37. Module de sac gonflable selon l'une quelconque des revendications 34 à 36, **caractérisé en ce que** la première partie de composant (82) et la seconde partie de composant (81) du moyen de fixation (80) sont reliées entre elles d'un seul tenant.

38. Module de sac gonflable selon l'une quelconque des revendications 34 à 37, **caractérisé en ce que** la seconde partie de composant (81) du moyen de fixation (80) dépasse de la première partie de composant (82) du moyen de fixation (80), en particulier sous la forme d'au moins un boulon.

39. Module de sac gonflable selon l'une quelconque des revendications 34 à 38, **caractérisé en ce que** la section transversale de l'élément étanche (86) entoure la seconde partie de composant (81) du moyen de fixation (80).

40. Module de sac gonflable selon l'une quelconque des revendications 34 à 39, **caractérisé en ce que** la seconde partie de composant (81) du moyen de fixation (80) est étendue le long d'un sens d'étendue (E).

41. Module de sac gonflable selon l'une quelconque des revendications 34 à 40, **caractérisé en ce que** la première partie de composant (82) du moyen de fixation (80) est disposée dans un espace intérieur (I), entouré par le sac de gaz (1), du sac de gaz (1).

42. Module de sac gonflable selon l'une quelconque des revendications 34 à 41, **caractérisé en ce que** la première partie de composant (82) du moyen de fixation (80) présente une zone d'appui (83) qui est aménagée et prévue pour l'appui sur le sac de gaz (1).

43. Module de sac gonflable selon l'une quelconque des revendications 34 à 42, **caractérisé en ce qu'**au moins une ouverture de passage (D) du sac de gaz (1) est prévue, et **en ce qu'**au moins une ouverture de passage (D) s'aligne avec l'ouverture (85) de l'enveloppe protectrice (2).

44. Module de sac gonflable selon la revendication 43, **caractérisé par** une première zone de bord (la), encadrant l'ouverture de passage (D), du sac de gaz (1).

45. Module de sac gonflable selon l'une quelconque des revendications 34 à 44, **caractérisé par** une seconde zone de bord (2a), encadrant l'ouverture (85), de l'enveloppe protectrice (2).

46. Module de sac gonflable selon la revendication 40 et les revendications 42 à 45, **caractérisé en ce que** la seconde partie de composant (81) du moyen de fixation (80) traverse le long du sens d'étendue (E) l'ouverture de passage (D) du sac de gaz (1) de sorte que la première zone de bord (1a) du sac de gaz (1) soit disposée le long du sens d'étendue (E) entre la zone d'appui (83) et la seconde zone de bord (2a) de l'enveloppe protectrice (2).

47. Module de sac gonflable selon les revendications 40 et 42 et l'une quelconque des revendications 45 ou 46, **caractérisé en ce que** l'élément étanche (86) presse la seconde zone de bord (2a) de l'enveloppe protectrice (2) le long du sens d'étendue (E) contre la zone d'appui (83) de la première partie de composant (82) pour rendre étanche l'ouverture (85).

48. Module de sac gonflable selon les revendications 40, 42 et 44 et l'une quelconque des revendications 45 à 47, **caractérisé en ce que** l'élément étanche (86) presse la seconde zone de bord (2a) de l'enveloppe protectrice (2) conjointement avec la première zone de bord (1a) du sac de gaz (1) le long du sens d'étendue (E) contre la zone d'appui (83) de la première partie de composant (82) pour rendre étanche l'ouverture (85) de l'enveloppe protectrice (2).

49. Module de sac gonflable selon l'une quelconque des revendications 34 à 48, **caractérisé en ce que** l'élément étanche (86) présente un corps (91a) en particulier en forme de cylindre creux, entourant en section transversale la seconde partie de composant (81) du moyen de fixation (80).

50. Module de sac gonflable selon les revendications 40, 45 et 49, **caractérisé en ce que** le corps (91a) présente une enveloppe reposant sur la seconde partie de composant (81) et entourant en section transversale la seconde partie de composant (81), de laquelle s'éloigne une bride (F) entourant l'enveloppe transversalement au sens d'étendue (E), avec un premier côté (F') tourné vers la seconde zone de bord (2a) de l'enveloppe protectrice (2).

51. Module de sac gonflable selon la revendication 50, **caractérisé en ce que** la bride (F) presse pour rendre étanche l'ouverture (85) de l'enveloppe protectrice (2) avec son premier côté (F') le long du sens d'étendue (E) contre la seconde zone de bord (2a) de l'enveloppe protectrice (2).

52. Module de sac gonflable selon les revendications 40 et 45 et la revendication 50, **caractérisé en ce que** l'élément étanche (86) comporte pour rendre étanche l'ouverture (85) un élément d'appui (91b) disposé le long du sens d'étendue (E) entre le premier côté (F') et la seconde zone de bord (2a) de l'enveloppe protectrice (2), lequel élément repose de manière étanche sur la seconde zone de bord (2a) de l'enveloppe protectrice (2) et du premier côté (F').

53. Module de sac gonflable selon la revendication 52, **caractérisé en ce que** l'élément d'appui est réalisé comme une bague d'étanchéité flexible (91b) qui entoure en section transversale la seconde partie de composant (81) du moyen de fixation (80).

54. Module de sac gonflable selon les revendications 40 et 45, **caractérisé en ce que** l'élément étanche (86) presse la seconde zone de bord (2a) de l'enveloppe protectrice (2) transversalement au sens d'étendue (E) contre la seconde partie de composant (81) du moyen de fixation (80) pour rendre étanche l'ouverture (85) de l'enveloppe protectrice (2).

55. Module de sac gonflable selon la revendication 54, **caractérisé en ce que** l'élément étanche est réalisé comme un tuyau flexible (90), un tube flexible thermorétractable ou comme un joint torique flexible (89).

56. Module de sac gonflable selon les revendications 40 et 45 ou l'une quelconque des revendications 46 à 53, dans la mesure où il est fait référence à la revendication 45, **caractérisé en ce que** l'élément étanche (86) est précontraint pour rendre étanche au gaz l'ouverture (85) le long du sens d'étendue (E) contre la seconde zone de bord (2a) de l'enveloppe protectrice (2).

57. Module de sac gonflable selon la revendication 40 ou l'une quelconque des revendications 41 à 56, dans la mesure où il est fait référence à la revendication 40, **caractérisé en ce que** l'élément étanche (86) est précontraint pour rendre étanche au gaz l'ouverture (85) transversalement au sens d'étendue (E) contre la seconde partie de composant (81) du moyen de fixation (80).

58. Module de sac gonflable selon la revendication 56 ou 57, **caractérisé en ce que** le moyen étanche (86) présente un élément ressort (88a) pour générer la précontrainte.

59. Module de sac gonflable selon la revendication 45, **caractérisé en ce que** l'élément étanche (86) est formé par la seconde zone de bord (2a) encadrant l'ouverture (85) de l'enveloppe protectrice (2) qui est aménagée et prévue afin d'être pressée lors de la génération d'une dépression dans l'espace (R) de l'enveloppe protectrice (2) contre la seconde partie de composant (81) du moyen de fixation (80) de sorte que l'ouverture (85) de l'enveloppe protectrice (2) soit rendue étanche au gaz.

60. Module de sac gonflable selon la revendication 45, **caractérisé en ce que** l'élément étanche (86) est réalisé comme un revêtement (93b) entourant la seconde partie de composant (81) du moyen de fixation (80) en section transversale de la seconde partie de composant (81), lequel revêtement est aménagé et prévu pour la liaison étanche au gaz de la seconde zone de bord (2a) avec la seconde partie de composant (81).

61. Module de sac gonflable selon les revendications 42 et 45, **caractérisé en ce que** l'élément étanche (86) est réalisé comme un revêtement (93a) entourant la seconde partie de composant (81) en section transversale de la zone d'appui (83), auquel la seconde zone de bord (2a) encadrant l'ouverture (85) de l'enveloppe protectrice (2) est reliée de telle manière que l'ouverture (85) de l'enveloppe protectrice (2) soit rendue étanche au gaz.

62. Module de sac gonflable selon la revendication 60 ou 61, **caractérisé en ce que** le revêtement (93a ; 93b) est prévu et aménagé afin d'être relié de manière étanche au gaz par chauffage à la seconde zone de bord (2a) de l'enveloppe protectrice (2).

63. Module de sac gonflable selon la revendication 60 ou 61, **caractérisé en ce que** le revêtement (93a ; 93b) est activable mécaniquement de telle manière que le revêtement puisse être relié de manière étanche au gaz à la seconde zone de bord (2a) de l'enveloppe protectrice (2) en particulier par pressage de la seconde zone de bord (2a) de l'enveloppe protectrice (2) contre le revêtement.

64. Module de sac gonflable selon l'une quelconque des revendications 34 à 59, **caractérisé en ce que** le moyen étanche (86) comporte une masse étanche (88b ; 88c ; 92a ; 92c) déformable supplémentaire.

65. Module de sac gonflable selon les revendications 45 et 64, **caractérisé en ce que** la masse étanche (88b) est disposée entre l'élément étanche (88a) et la seconde zone de bord (2a) de l'enveloppe protectrice (2).

66. Module de sac gonflable selon les revendications 44 et 45 et la revendication 64 ou 65, **caractérisé en ce que** la masse étanche (88c ; 92a ; 92c) est disposée au moins en partie entre la seconde zone de bord (2a) de l'enveloppe protectrice (2) et la première zone de bord (1a) du sac de gaz (1).

67. Module de sac gonflable selon la revendication 64 ou l'une quelconque des revendications 65 ou 66, dans la mesure où il est fait référence à la revendication 64, **caractérisé en ce que** la masse étanche (88b ; 88c ; 92a ; 92c) repose sur la seconde partie de composant (81) du moyen de fixation.

68. Module de sac gonflable selon l'une quelconque des revendications 34 à 67, **caractérisé en ce que** l'élément étanche (86) comporte un élément de disque (92b) destiné à compenser les inégalités du sac de gaz (1).

69. Module de sac gonflable selon la revendication 68, **caractérisé en ce que** la section transversale de l'élément de disque (92b) entoure en forme d'anneau la seconde partie de composant (81) du moyen de fixation (80).

70. Module de sac gonflable selon les revendications 40, 44 et 45 et la revendication 68 ou 69, **caractérisé en ce que** l'élément de disque (92b) est disposé le long du sens d'étendue (E) entre la seconde zone de bord (2a) de l'enveloppe protectrice (2) et la première zone de bord (1a) du sac de gaz (1).

71. Module de sac gonflable selon les revendications 40 et 45 et l'une quelconque des revendications 64 à 67 et l'une quelconque des revendications 68 à 70, **caractérisé en ce que** la masse étanche (92a) est disposée au moins en partie le long du sens d'étendue (E) entre l'élément de disque (92b) et la seconde zone de bord (2a) de l'enveloppe protectrice (2).

72. Module de sac gonflable selon les revendications 40 et 44 et l'une quelconque des revendications 64 à 67 et l'une quelconque des revendications 68 à 71, **caractérisé en ce que** la masse étanche (92c) est disposée au moins en partie le long du sens d'étendue (E) entre l'élément de disque (92b) et la première zone de bord (1a) du sac de gaz (1).

73. Module de sac gonflable selon la revendication 42 ou l'une quelconque des revendications 43 à 72, dans la mesure où il est fait référence à la revendication 42, **caractérisé en ce que** la zone d'appui (83) est réalisée comme un anneau plat.

74. Module de sac gonflable selon les revendications 40 et 42 ou l'une quelconque des revendications 43 à 73, dans la mesure où il est fait référence à la revendication 42, **caractérisé en ce que** la zone d'appui (83) repose sur une troisième zone de bord (O'), encadrant une ouverture d'afflux (O) du sac de gaz (1), du sac de gaz (1) de sorte que la troisième zone de bord (O') du sac de gaz (1) soit disposée le long du sens d'étendue (E) entre la zone d'appui et l'enveloppe protectrice.

75. Module de sac gonflable selon les revendications 43 et 74, **caractérisé en ce que** l'ouverture de passage (D) est réalisée sur la troisième zone de bord (O').

76. Module de sac gonflable selon la revendication 42 ou l'une quelconque des revendications 43 à 75, dans la mesure où il est fait référence à la revendication 42, **caractérisé en ce que** la première partie de composant (82) du moyen de fixation comporte un diffuseur (84) qui est éloigné de la zone d'appui (83) dans l'espace intérieur (1) du sac de gaz (1).

77. Module de sac gonflable selon les revendications 38, 40, 42 et selon la revendication 43 ou l'une quelconque des revendications 44 à 76, dans la mesure où il est fait référence à la revendication 43, **caractérisé en ce que** la seconde partie de composant du moyen de fixation (80) est formée par une pluralité de boulons (81) éloignés le long du sens d'étendue (E) de la zone d'appui (81), lesquels traversent une pluralité correspondante d'ouvertures de passage (D) du sac de gaz (1) et d'ouvertures (85) s'alignant avec les ouvertures de passage (D) de l'enveloppe protectrice (2) et dépassent de l'espace (R) entouré par l'enveloppe protectrice (2), et **en ce que** les ouvertures (85) sont fermées de manière étanche au gaz par une pluralité correspondante d'éléments étanches (86).

78. Module de sac gonflable selon la revendication 38 ou 77, **caractérisé en ce qu'**au moins un boulon (81) présente un filetage extérieur (81a) pour fixer le paquet de sac de gaz (10) sur un support du paquet de sac de gaz.
